(19) Europäisches Patentamt
European Patent Office
Office européen des brevets

(11) **EP 4 727 209 A1**

(12) **EUROPEAN PATENT APPLICATION**
published in accordance with Art. 153(4) EPC

(43) Date of publication:
**15.04.2026 Bulletin 2026/16**

(51) International Patent Classification (IPC):
*H04W 36/00* (2009.01)   *H04W 24/08* (2009.01)

(21) Application number: 23937908.4

(22) Date of filing: 23.05.2023

(52) Cooperative Patent Classification (CPC):
H04W 64/00; H04W 24/08; H04W 24/10;
H04W 36/00; H04W 36/00837; H04W 36/0085;
H04W 36/08; H04W 36/30; H04W 36/322;
H04W 36/362; H04W 84/06

(86) International application number:
**PCT/CN2023/095770**

(87) International publication number:
**WO 2024/239232 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quectel Wireless Solutions Co., Ltd.
Shanghai 201601 (CN)**

(72) Inventors:
• LYU, Ling
  Shanghai 201601 (CN)
• ZHAO, Zheng
  Shanghai 201601 (CN)
• YANG, Zhongzhi
  Shanghai 201601 (CN)

(74) Representative: **Fish & Richardson P.C.
Highlight Business Towers
Mies-van-der-Rohe-Straße 8
80807 München (DE)**

(54) **WIRELESS COMMUNICATION METHOD, TERMINAL DEVICE, AND NETWORK DEVICE**

(57)     A method for wireless communication, a terminal device, and a network device are provided. The method for wireless communication includes: sending, by a terminal device, a measurement report, where the sending of the measurement report is triggered based on a first condition, and the first condition is associated with a plurality of triggers.

FIG. 6

## Description

## TECHNICAL FIELD

The present disclosure relates to the field of communication technology, and more specifically to a method for wireless communication, a terminal device, and a network device.

## BACKGROUND

During a cell handover (e.g., conditional handover) process, a terminal device is able to perform measurement reporting based on a trigger condition configured by a network device and execute the cell handover. However, after the terminal device performs measurement reporting based on the trigger condition, there may be occurrences of unsuccessful handover (UHO) and ping-pong (PP) handover during executing the cell handover, leading to an increase in the overhead for subsequent link recovery and reconstruction.

## SUMMARY

The present disclosure provides a method for wireless communication, a terminal device, and a network device. The following describes various aspects involved in the present disclosure.

According to a first aspect, a method for wireless communication is provided, including: sending, by a terminal device, a measurement report, where the sending of the measurement report is triggered based on a first condition, and the first condition is associated with a plurality of triggers.

According to a second aspect, a method for wireless communication is provided, including: receiving, by a serving cell, a measurement report sent by a terminal device, where the sending of the measurement report is triggered based on a first condition, and the first condition is associated with a plurality of triggers.

According to a third aspect, a method for wireless communication is provided, including: receiving, by a target cell, an access request sent by a terminal device, where the access request is used to request a handover of the terminal device from a service cell to the target cell; and where the handover is triggered based on a second condition, and the second condition is associated with a plurality of triggers.

According to a fourth aspect, a terminal device is provided, including: a sending module, configured to send a measurement report, where the sending of the measurement report is triggered based on a first condition, and the first condition is associated with a plurality of triggers.

According to a fifth aspect, a network device is provided, where the network device is a network device to which a serving cell belongs, including: a receiving module, configured to receive a measurement report sent by a terminal device, where the sending of the measurement report is triggered based on a first condition, and the first condition is associated with a plurality of triggers.

According to a sixth aspect, a network device is provided, where the network device is a network device to which a target cell belongs, including: a receiving module, configured to receive an access request sent by a terminal device, where the access request is used to request the terminal device to be handed over from a service cell to the target cell; and where the handover is triggered based on a second condition, and the second condition is associated with a plurality of triggers.

According to a seventh aspect, a terminal device is provided, including: a processor, a memory, and a communication interface, where the memory is configured to store one or more computer programs, and the processor is configured to invoke the computer programs in the memory to cause the terminal device to perform some or all of the operations in the method according to the first aspect.

According to an eighth aspect, a network device is provided, including: a processor, a memory, and a communication interface, where the memory is configured to store one or more computer programs, and the processor is configured to invoke the computer programs in the memory to cause the network device to perform some or all of the operations in the method according to any one of the second aspect and the third aspect.

According to a ninth aspect, an embodiment of the present disclosure provides a communication system, where the communication system includes the above terminal device and/or network device. In another possible design, the communication system may further include other devices that interact with the terminal device or network device as provided in the embodiments of the present disclosure.

According to a tenth aspect, an embodiment of the present disclosure provides a computer-readable storage medium, where the computer-readable storage medium stores a computer program, and the computer program causes a computer to perform some or all of the operations in the methods in the foregoing aspects.

According to an eleventh aspect, an embodiment of the present disclosure provides a computer program product, where the computer program product includes a non-transitory computer-readable storage medium storing a computer program, and the computer program is executable to cause a computer to perform some or all of the operations in the methods in the foregoing aspects. In some implementations, the computer program product may be a software installation package.

According to a twelfth aspect, an embodiment of the present disclosure provides a chip, where the chip includes a memory and a processor, and the processor invokes and runs a computer program from the memory, to implement some or all of the operations described in the methods in the foregoing aspects.

In the embodiments of the present disclosure, the terminal device is capable of triggering the sending of the measurement report based on the first condition associated with the plurality of triggers, meaning that the terminal device can jointly trigger measurement reporting based on the first condition associated with various triggers. Compared to measurement reporting triggered by the condition associated with a single trigger, measurement reporting triggered by the condition associated with the plurality of triggers can comprehensively consider various factors affecting cell handover, which is conducive to avoiding or reducing occurrences of unnecessary handover and ping-pong handover.

## BRIEF DESCRIPTION OF THE DRAWINGS

FIG. 1 is an example diagram of a system architecture of a wireless communication system to which an embodiment of the present disclosure can be applied.

FIG. 2 is an example diagram of a satellite network architecture to which an embodiment of the present disclosure can be applied.

FIG. 3 is another example diagram of a satellite network architecture to which an embodiment of the present disclosure can be applied.

FIG. 4 is another example diagram of a satellite network architecture to which an embodiment of the present disclosure can be applied.

FIG. 5 is a schematic diagram of an earth-moving cell scenario.

FIG. 6 is a schematic flowchart of a method for wireless communication provided in an embodiment of the present disclosure.

FIG. 7 is another schematic flowchart of a method for wireless communication provided in an embodiment of the present disclosure.

FIG. 8 is yet another schematic flowchart of a method for wireless communication provided in an embodiment of the present disclosure.

FIG. 9 is a schematic diagram of a possible implementation of operation S810.

FIG. 10 is a schematic diagram of a possible implementation of operation S820.

FIG. 11 is a schematic diagram of a possible implementation of operation S830 and operation S840.

FIG. 12 is a schematic diagram of a possible implementation of operation S850.

FIG. 13 is a schematic structural diagram of a terminal device according to an embodiment of the present disclosure.

FIG. 14 is a schematic structural diagram of a network device according to an embodiment of the present disclosure.

FIG. 15 is another schematic structural diagram of a network device according to an embodiment of the present disclosure.

FIG. 16 is a schematic structural diagram of an apparatus for communication according to an embodiment of the present disclosure.

## DETAILED DESCRIPTION OF THE EMBODIMENTS

COMMUNICATION SYSTEM ARCHITECTURE

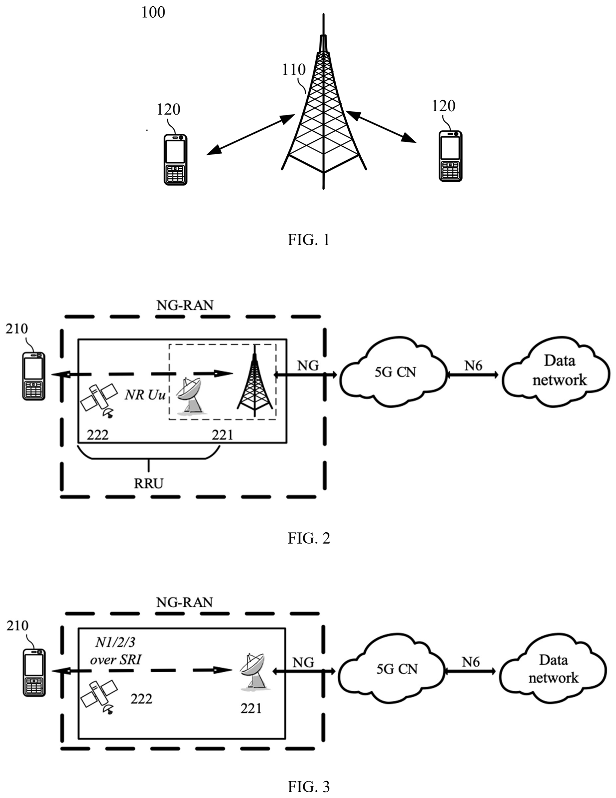

FIG. 1 is an example diagram of a system architecture of a wireless communication system 100 to which an embodiment of the present disclosure can be applied. The wireless communication system 100 may include a network device 110 and a terminal device 120, and the network device 110 may be a device that communicates with the terminal device 120. The network device 110 may provide communication coverage for a particular geographic region and may communicate with the terminal device 120 located within the coverage region.

A coverage area of the network device 110 may be divided into one or more cells, and each cell may correspond to one or more frequency points. In other words, each cell may be regarded as a region formed by a coverage area of one or more frequency points. It should be noted that the cell may refer to a region in a wireless coverage area of the network device. In embodiments of the present disclosure, different cells may correspond to the same network device or different network devices, which is not limited in the embodiments of the present disclosure. For example, a network device to which the cell #1 belongs may be the same as a network device to which the cell #2 belongs, e.g., the cell #1 and the cell #2 may be managed by the same base station. Alternatively, the network device to which the cell #1 belongs is different from the network device to which the cell #2 belongs, e.g., the cell #1 and the cell #2 may be managed by different base stations.

FIG. 1 exemplarily shows one network device and two terminal devices, and optionally, the wireless communication system 100 may include a plurality of network devices, and a coverage area of each network device may include another number of terminal devices, which is not limited in the embodiments of the present disclosure.

Optionally, the wireless communications system 100 may further include another network entity such as a network controller, a mobility management entity, etc., which is not limited in the embodiments of the present disclosure.

The embodiments of the present disclosure may be applied to various communication systems, such as a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, an evolution system of the NR system, an LTE-based access to unlicensed spectrum (NTN-U) system, an NR-based access to unlicensed spectrum (NR-U) system, a non-terrestrial network (NTN) system, a universal mobile telecommunication system (UMTS), a wireless local area networks (WLAN), a wireless fidelity (WiFi), a 5th-generation (5G) system, or other communication systems, e.g., a future communication system, which may be, for example, a 6th-generation (6G) mobile communication system, or a satellite communication system, etc.

Generally, conventional communication systems support a limited number of connections and are easy to implement. However, with the development of communication technologies, the communication system may not only support conventional communication, but also support, for example, device to device (D2D) communication, machine to machine (M2M) communication, machine type communication (MTC), vehicle to vehicle (V2V) communication, vehicle to everything (V2X) communication, etc. The embodiments of the present disclosure may also be applied to these communication systems.

The communication system in the embodiments of the present disclosure may be applied to a carrier aggregation (CA) scenario, a dual connectivity (DC) scenario, or a standalone (SA) fabric scenario.

The communication system in the embodiments of the present disclosure may be applied to an unlicensed spectrum. The unlicensed spectrum may also be considered as a shared spectrum. Alternatively, the communication system in the embodiments of the present disclosure may also be applied to a licensed spectrum. The licensed spectrum may also be considered as a dedicated spectrum.

The embodiments of the present disclosure may be applied to the NTN system or may be applied to a terrestrial network (TN) system. As an example rather than a limitation, the NTN system includes an NR-based NTN system and an IoT-based NTN system. Exemplarily, in the scenario where narrow band internet of things (NB-IoT) and enhanced machine type communication (eMTC) access the NTN, a system composed of an IoT terminal device and the NTN network may be understood as an IoT-based NTN system.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user apparatus. In embodiments of the present disclosure, the terminal device may be a device that provides voice and/or data connectivity to a user, which may be used to connect people, objects, or machines, e.g., a handheld device, a vehicle-mounted device, etc., having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides sidelink signals between UEs in V2X, D2D, etc. For example, the cellular phone and the car use sidelink signals to communicate with each other. The cellular phone and the smart home device communicate with each other without relaying communication signals through the base station.

The network device in the embodiments of the present disclosure may be a device configured to communicate with the terminal device, and the network device may also be referred to as an access network device or a radio access network device. For example, the network device may be a base station. The network device in the embodiments of the present disclosure may refer to a radio access network (RAN) node (or device) that accesses the terminal device to a wireless network. The base station may broadly cover various names as follows, or may be replaced with the following names, such as a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multistandard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may further refer to a communication module, a modem, or a chip disposed in the foregoing device or apparatus. The base station may also be a mobile switching center and a device that undertakes a function of the base station in D2D, V2X, M2M communication, a network side device in the 6G network, a device that undertakes a function of the base station in a future communication system, etc. The base station may support networks of the same or different access technologies. A specific technology adopted by the network device and a specific form of the device are not limited in the embodiments of the present disclosure.

The base station may be fixed or mobile. For example, a helicopter or drone may be configured to serve as a mobile base station, and one or more cells move according to the location of the mobile base station. In other examples, a helicopter or drone may be configured to serve as a device in communication with another base station.

In some deployments, the network device in the embodiments of the present disclosure may be a CU or a DU, or the network device includes a CU and a DU. The gNB may also include AAU.

The network device and the terminal device may be deployed on land, whether indoor or outdoor, handheld or vehicle-mounted, or may be deployed on a water surface, or may be deployed on an aircraft, a balloon, and a satellite in the air. The scenarios in which the network device and the terminal device are located are not limited in the embodiments of the present disclosure.

It should be understood that all or part of functions of the communication device in the present disclosure may also be implemented by a software function running on hardware or implemented by a virtualization function instantiated on a platform (e.g., a cloud platform).

For ease of understanding of the embodiments of the present disclosure, the following first provides a brief introduction to the terms involved in the embodiments of the present disclosure.

CELL HANDOVER

Cell handover (HO) aims to enhance the continuity of service provided by a communication system to a terminal device. In wireless communication systems, when the terminal device moves from one cell (also referred to as a "source cell") to another cell (also referred to as a "target cell"), the terminal device needs to be handed over to another cell to maintain communication continuity. The cell may be a primary cell (PCell) or a primary secondary cell (PSCell). Generally, the cell handover may be categorized into a traditional handover mechanism and a conditional handover mechanism.

For the traditional handover mechanism, in order to improve the continuity of service provided by the communication system to the terminal device in a connected state, a network device may send a handover command to the terminal device at an appropriate time (e.g., when a signal measurement result of the terminal device in a serving cell is lower than a threshold) to instruct the terminal device to execute a handover. In some implementations, the above handover command may be an RRC reconfiguration message that includes synchronization reconfiguration information.

In contrast to the traditional handover mechanism, conditional handover (CHO) may avoid handover failures caused by changes in wireless link status or signaling transmission delays during a signaling interaction process between the terminal device and the source cell and/or between the source cell and the target cell. In other words, CHO can improve the success rate and robustness of the handover of the terminal device, especially in regions with rapid signal changes, where advantages of CHO in enhancing the success rate and robustness of the handover of the terminal device become more apparent.

For the conditional handover mechanism, the terminal device may select the target cell (i.e., the cell or network device that the terminal device needs to access) based on a specific condition and initiate a handover execution process. In the conditional handover mechanism, the network device (e.g., a source base station) may configure one or more candidate cell configurations and one or more CHO execution conditions (also referred to as CHO handover conditions) to the terminal device.

In some embodiments, the network device may configure one or more candidate cell configurations and one or more CHO execution conditions to the terminal device through CHO configuration. In other words, the CHO configuration may include one or more candidate cell configurations generated by a candidate base station, as well as one or more CHO execution conditions generated by the source base station. In some embodiments, the CHO configuration may be carried in an RRC reconfiguration message.

In some embodiments, one or more CHO execution conditions generated by the network device are configured based on the status of one or more candidate cells. For example, certain communication systems (such as NR systems) may configure separate CHO execution conditions for each candidate cell.

The CHO execution condition refers to the execution of CHO by the terminal device when one or more conditions are met. Accordingly, the terminal device may execute a handover condition evaluation task to evaluate whether the above one or more CHO execution conditions are met. When the one or more CHO execution conditions are met, the terminal device may execute a handover from a source cell (also referred to as a current serving cell, serving cell, etc.) to a target cell that meets the CHO execution conditions, and the target cell is one of one or more candidate cells configured by the network device.

A start time for the terminal device to evaluate the CHO execution conditions may be from when the terminal device receives the CHO configuration. A stop time for the terminal device to evaluate the CHO execution conditions may be after the terminal device has executed the handover.

In some embodiments, the CHO execution conditions may include one or more (e.g., two) trigger conditions (also referred to as trigger events). For example, the CHO execution conditions may include the signal quality of the serving cell being lower than a certain threshold, or the signal quality of the candidate cell being higher than a certain threshold, and so on.

In some embodiments, the CHO execution conditions only support a single reference signal (RS) type. For example, the CHO execution conditions may only support a synchronization signal and PBCH block (SS/PBCH block, referred to as SSB) type. Alternatively, the CHO execution conditions may only support a channel state information reference signal (CSI-RS) type.

CHO execution conditions may be associated with different trigger metrics. For example, the CHO execution conditions may be associated with one or more of the following trigger metrics: reference signal receiving power (RSRP), reference signal receiving quality (RSRQ), reference signal-signal to interference plus noise ratio (RS-SINR, referred to as SINR), etc. In some embodiments, up to two different trigger metrics may be configured simultaneously for the CHO execution conditions (e.g., configuring RSRP and RSRQ simultaneously, or configuring RSRP and RS-SINR simultaneously, etc.) to evaluate the CHO execution conditions of a single candidate cell.

TRIGGER CONDITION (TRIGGER EVENT)

In some embodiments, the trigger condition may be used for the terminal device to determine whether to report/send a measurement report (MR) to the serving cell (source cell). In other words, the trigger condition may serve as an evaluation condition or evaluation event for evaluating whether the terminal device should report the MR to the serving cell.

In some embodiments, when the trigger condition is included in the CHO execution conditions, the trigger condition may be used for the terminal device to determine whether to trigger a handover to the target cell.

The trigger condition is typically triggered by a cell-level result. Considering that different MR criteria may be used in the traditional handover and conditional handover, different trigger conditions may be configured for the traditional handover and conditional handover. In some embodiments, the different MR criteria used in the traditional handover and conditional handover may be pre-configured by the network device to the terminal device, and when a mobility measurement result of the terminal device meets a given threshold or criterion, a corresponding event may be triggered.

In some embodiments, any handover decision related to the terminal device may be made based on the measurement report of the terminal device.

The trigger condition may include various types, e.g., the trigger condition may include at least one of an A3 event, A4 event, A5 event, D1 event, and T1 event.

The A3 event includes a measurement result of a candidate cell being higher than a measurement result of a current serving cell where the terminal device is located, and a difference between the measurement result of the candidate cell and the measurement result of the current serving cell being greater than or equal to a first threshold.

The A4 event includes the measurement result of the candidate cell being greater than or equal to a second threshold.

The A5 event includes the measurement result of the current serving cell where the terminal device is located being less than a third threshold, and the measurement result of the candidate cell being greater than a fourth threshold.

The D1 event includes a distance between the terminal device and a position reference point 1 being greater than a fifth threshold, and a distance between the terminal device and a position reference point 2 being less than a sixth threshold.

The T1 event includes a local time of the terminal device exceeding a configured time 1 but not exceeding a configured time 2, where the time 2 is later than the time 1.

It should be noted that one or more parameters among the above first threshold, second threshold, third threshold, fourth threshold, fifth threshold, sixth threshold, time 1, and time 2 may be configured by the network device to the terminal device, e.g., the network device may configure them through system broadcasting messages or dedicated signaling.

In some implementations, a configuration format of the time 2 may include two types. In configuration format 1, the time 2 may be a universal coordinated time (UTC), e.g., the configuration format of the time 2 may be in the form of year-month-day hour-minute-second, such as 2023.5.17 17:43:05. In configuration format 2, the time 2 may be determined based on the time 1. For example, the time 2 may be a time after a fixed duration from time 1, such as a time corresponding to 20 seconds after time 1. Of course, the time 2 may also adopt other configuration formats.

In some implementations, one candidate cell may be associated with only one trigger condition. In other implementations, one candidate cell may be associated with at least two trigger conditions.

The trigger condition may be categorized into different types based on a triggering method (also referred to as a trigger). For example, the trigger of the trigger condition may include a measurement-based trigger, a location-based trigger, a time/timer-based trigger, an elevation angle-based trigger, etc. Thus, the trigger condition may include a measurement-based trigger condition, a location-based trigger condition, a time/timer-based trigger condition, an elevation angle-based trigger condition, etc. As an example, the A3 event, A4 event, and A5 event may be measurement-based trigger conditions. As another example, the D1 event may be a location-based trigger condition. As yet another example, the T1 event may be a time/timer-based trigger condition.

The following provides a brief introduction to trigger conditions of different triggers.

The measurement-based trigger condition relies on estimation of the terminal device and established channel estimation techniques. The measurement-based trigger condition may be implemented by measuring the received power and/or quality of the cell by the terminal device. For example, the measurement-based trigger condition may be associated with different triggering metrics, such as one or two of RSRP, RSRQ, and RS-SINR. Since the measurement-based trigger condition is related to the received power and/or quality of the cell, small differences in the values of the triggering metrics in cell overlapping and propagation delay regions may lead to the unreliable measurement-based trigger.

The location-based trigger condition may utilize the location of the terminal device and/or network device to configure the trigger condition. For example, the location-based trigger condition may be applied in NTN scenarios to utilize satellite ephemeris and deterministic satellite motion to predict/pre-configure the location-based trigger condition. When using the location-based trigger condition for measurement reporting and handover, the terminal device may trigger a handover to an unavailable cell, such as a cell with changed channel conditions/incorrect network settings, or an NTN cell that has deviated or is inconsistent, etc.

In cases where the terminal device loses ground coverage, the time/timer-based trigger condition helps maintain service continuity. However, depending on the accuracy of the ephemeris data and the mobility of the terminal device, the time/timer-based triggering may not be accurate, potentially leading to a premature or delayed handover of the terminal device.

The elevation angle-based trigger condition is suitable for cell handovers in irregularly shaped handover regions. However, the terminal device needs to evaluate the elevation angle based on its position and satellite ephemeris data, which has poor applicability.

RADIO RESOURCE MANAGEMENT (RRM) MEASUREMENT

RRM is a technology in wireless networks that can be used to improve network performance and the utilization of radio resources. RRM measurement is a method by which the terminal device performs beam sweeping under a mobility measurement framework to find appropriate receive beams for mobility measurement. During the RRM measurement process, the terminal device may measure reference signals from multiple neighbor cells using different receive beam hypotheses, seek an optimal beam pair and perform Layer 3 filtering, and then report a cell or beam quality report to the network device.

During the cell handover process, the terminal device needs to perform RRM measurement (referred to as measurement) to evaluate the signal quality and strength of neighbor cells of the terminal device, ensuring that the terminal device remains connected to the best cell, thereby achieving better network performance and user experience.

In some embodiments, certain communication systems (such as NR systems) specify that the current mobility measurement framework primarily relies on Layer 1 measurement, and then generates a cell-level measurement result through beam consolidation and Layer 3 filtering. This approach is time-consuming and may affect cell handover (e.g., conditional handover), as the decision for the terminal device to move to the target cell is influenced by delays caused by beam sweeping and Layer 3 filtering in this approach.

NTN

Currently, the 3rd generation partnership project (3GPP) is researching NTN technology. NTN generally provides communication services to terrestrial users through satellite communication. Compared to terrestrial communication networks (e.g., terrestrial cellular networks), satellite communication has many unique advantages.

First, satellite communication is not limited by user geography. For example, typical terrestrial communication networks cannot cover oceans, high mountains, deserts, and other areas where network devices cannot be deployed. Additionally, terrestrial communication networks may not cover certain sparsely populated areas. In contrast, for satellite communication, the satellite communication may theoretically cover every corner of the Earth, as a single satellite may cover a large terrestrial area and orbit the Earth.

Second, satellite communication has significant social value. The satellite communication may provide low-cost coverage to remote mountainous areas and impoverished countries or regions, allowing people in these areas to access advanced voice communication and mobile internet technologies. From this perspective, satellite communication helps to narrow the digital divide with developed regions and promotes the development of these areas.

Furthermore, satellite communication benefits from long-distance capabilities, where the increase in communication distance does not significantly raise communication costs.

Finally, satellite communication is highly stable and is not affected by natural disasters.

Communication satellites are classified based on their orbital altitudes into low earth orbit (LEO) satellites, medium earth orbit (MEO) satellites, geostationary earth orbit (GEO) satellites, and high elliptical orbit (HEO) satellites. Currently, the main focus of research is on LEO satellites and GEO satellites.

LEO satellites typically operate at altitudes ranging from 500 km to 1500 km. Correspondingly, an orbital period of the LEO satellite is approximately 1.5 to 2 hours. For LEO satellites, a signal propagation delay for single-hop communication between users is generally less than 20 ms. The maximum visibility time of the LEO satellite is about 20 minutes. LEO satellites have advantages such as short signal propagation distances, low link loss, and low transmission power requirements for users' terminal devices.

GEO satellites have an orbital altitude of 35,786 km. An orbital period of the GEO satellite around the Earth is 24 hours. For GEO satellites, the signal propagation delay for single-hop communication between users is generally about 250 ms.

To ensure satellite coverage and enhance a system capacity of the overall satellite communication system, satellites typically employ multi-beam coverage of terrestrial areas. Therefore, a single satellite may form dozens or even hundreds of beams to cover terrestrial areas. Each beam of the satellite may cover a terrestrial area with a diameter of several tens to hundreds of kilometers.

Currently, the NTN system includes the NR-NTN system and an Internet of things (IoT)-NTN system.

SATELLITE NETWORK ARCHITECTURE

Currently, there are two types of satellites considered by 3GPP: one is a transparent payload satellite, and the other is a regenerative payload satellite. The following describes a network architecture involving the transparent payload satellite and the regenerative payload satellite with reference to FIG. 2 to FIG. 4.

In the satellite network architecture shown in FIG. 2 to FIG. 4, the satellite network architecture includes a terminal device 210, a satellite node 222, and a terrestrial receiving station 221 (referred to as "terrestrial station"). Wireless communication exists between the terminal device 210 and the satellite node 222, and the terminal device 210 may send data to the satellite node 221 through the link between the terminal device 210 and the satellite node 221. For example, data may be sent via a service link to the satellite node 221. Correspondingly, after receiving the data, the satellite node 221 may send the data to the terrestrial receiving station 222 via the link between the satellite node 221 and the terrestrial receiving station 222. For example, the data may be sent via a wireless link (such as a feeder link) to the terrestrial receiving station 221. Correspondingly, after the terrestrial receiving station 221 receives the data from the satellite node 222, it transmits the data to a core network (data network), and then processes the data through the core network, such as by exchanging data with other terminals, etc. It should be understood that the service link refers to the link between the terminal device 210 and the satellite node 222, and the feeder link refers to the link between the satellite node 222 and the terrestrial receiving station 221. In other possible implementations, the link between the terminal device and the satellite node and/or the link between the satellite node and the terrestrial receiving station may also be referred to by other terms, which is not limited in the present disclosure.

The satellite node 222 mentioned above may be classified into three types. The first type of satellite node is used only for forwarding, i.e., it has only transparent payload functionality. In some implementations, such a type of satellite node may only provide one or more of the following functions: radio frequency filtering, frequency conversion, and power amplification. For this type of satellite node, a received terminal device signal may be amplified and then sent to the terrestrial receiving station, with no processing of the terminal device signal performed at the satellite node, as shown in FIG. 2. In this case, communication between the terminal device and the satellite node is via an NR-Uu interface, communication between the satellite node and the terrestrial receiving station (e.g., including a NTN remote radio unit (RRU) and gNB) is via the NR-Uu interface, communication between the terrestrial receiving station and a 5G core network (5G CN) is via N1, N2, and N3 interfaces, and communication between the 5G CN and the data network is via an N6 interface.

The second type of satellite node has complete base station processing functionality. The satellite node serves as a base station for the terrestrial terminal device, and the communication between the satellite node and the terminal device is essentially the same as normal 5G communication, as shown in FIG. 3. In some implementations, such a type of satellite node may also provide one or more of the following functions: demodulation, decoding, routing, conversion, encoding, and modulation. In this case, communication between the terminal device and the satellite node is via the NR-Uu interface, communication between the satellite node and the terrestrial receiving station is via a satellite radio interface (SRI) that may be used to send interface messages between the satellite node and the 5G CN (e.g., N2, N3 interface messages), communication between the terrestrial receiving station and 5G CN is via the N1, N2, and N3 interfaces, and communication between the 5G CN and the data network is via the N6 interface.

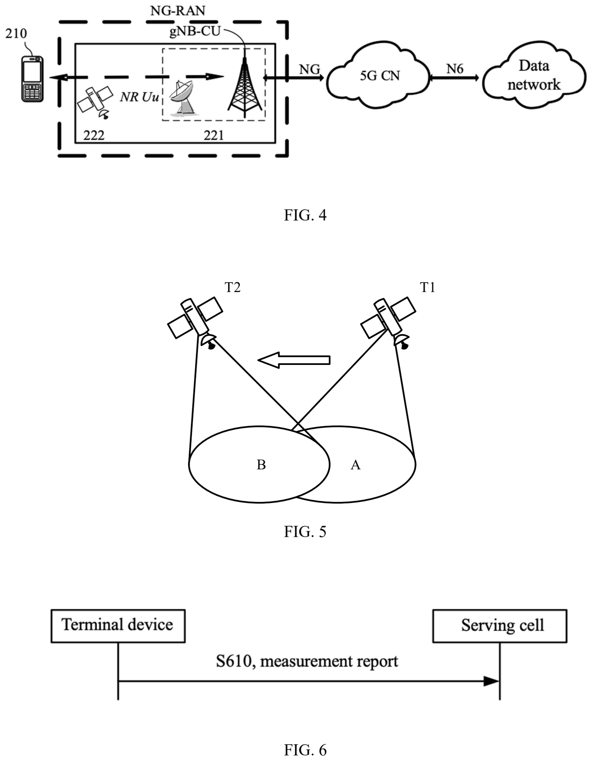

The third type of satellite node has DU processing functionality. The satellite node functions as a DU for the terrestrial terminal devices, and the communication between the satellite node and the terminal device is essentially the same as the communication between the terminal device and DU in a normal 5G terrestrial communication system, as shown in FIG. 4. In this case, communication between the terminal device and satellite node is via the NR-Uu interface, communication between the satellite node and terrestrial receiving station (e.g., including gNB-CU) is via the SRI interface that may be used to transmit an F1 interface message between the satellite and the terrestrial receiving station, communication between the terrestrial receiving station and 5G CN is via the N1/N2/N3 interfaces, and communication between the 5G CN and the data network is via the N6 interface.

In some implementations, a coverage area of the NTN cell may change as the satellite moves, causing a reference position of the cell to change accordingly. For example, the NTN cell includes an earth-moving cell, where a coverage area of the earth-moving cell changes as the satellite moves, as shown in FIG. 5. The coverage area of the satellite at time T1 is A, and the coverage area of the satellite at time T2 is B. The arrow in FIG. 5 is used to indicate a direction of the satellite's movement.

In NTN multi-satellite coverage scenarios, the traditional handover mechanism (i.e., the network device selecting the target cell and controlling the terminal device to perform a handover) cannot meet the demands for mobility continuity and low failure rates in NTN scenarios. Therefore, the focus in NTN scenarios is primarily on CHO.

Currently, during the cell handover (e.g., conditional handover) process, the terminal devices can perform the measurement reporting based on the trigger condition and execute the cell handover. However, after the terminal device performs the measurement reporting based on the trigger condition, the unnecessary handover and ping-pong handover may occur during the execution of the cell handover, leading to increased overhead for subsequent link recovery and reconstruction.

The applicant found that the cause of the above issues is that, in the current cell handover process, the trigger condition for measurement reporting by the terminal device is based on a single trigger. A result triggered by a single trigger is not reliable, which may lead to the unnecessary handover and ping-pong handover. For example, the location-based trigger condition does not consider variations in channel conditions, potentially resulting in handovers to unavailable cells. Alternatively, the measurement-based trigger condition may yield unreliable results due to slight differences in measurement values (such as RSRP, RSRQ, etc.) in cell overlapping and propagation delay regions. In other words, the cell handover for the trigger condition based on the single trigger is prone to unnecessary handovers and ping-pong handovers, increasing the overhead for subsequent link recovery and reconstruction.

To address the above issues, the embodiments of the present disclosure provide a method for wireless communication, a terminal device, and a network device that can perform measurement reporting based on a trigger condition (i.e., the first condition below) associated with a plurality of triggers, comprehensively considering various factors affecting the cell handover, which is beneficial for avoiding or reducing unnecessary handovers and ping-pong handovers. The technical solutions of the embodiments of the present disclosure are described in detail below.

FIG. 6 is a schematic flowchart of a method for wireless communication provided in an embodiment of the present disclosure. The method shown in FIG. 6 is described from the perspective of interaction between the terminal device and the serving cell (also referred to as the source cell). The terminal device may be, for example, the terminal device 120 shown in FIG. 1, and the network device corresponding to the serving cell may be the network device 110 shown in FIG. 1.

In some embodiments, the terminal device may be a terminal device accessing an NTN network. In other words, the serving cell may be an NTN cell. However, the embodiments of the present disclosure are not limited thereto, for example, the terminal device may also be a terminal device accessing a TN network, or the serving cell may also be a TN cell, etc.

In some embodiments, when the terminal device is a terminal device accessing the NTN network, the serving cell of the terminal device may be an earth-moving cell. In some embodiments, when the terminal device is a terminal device accessing the NTN network, one or more of neighbor cells of the terminal device may be terrestrial mobile cells.

In some embodiments, the terminal device may adopt a conditional handover mechanism for the cell handover. However, the embodiments of the present disclosure are not limited thereto, in some embodiments, the terminal device may adopt the traditional handover mechanism for the cell handover.

The method shown in FIG. 6 may include operation S610, which is described below.

At operation S610, the terminal device sends a measurement report. For example, the terminal device sends a measurement report to the serving cell.

In the embodiments of the present disclosure, the measurement report mentioned above is triggered based on the first condition. The first condition is associated with (also referred to as related to, relevant with, etc.) a plurality of triggers. In other words, the first condition is a condition associated with the plurality of triggers.

In other words, in the embodiments of the present disclosure, the sending/reporting of the measurement report is jointly triggered based on the trigger condition associated with the plurality of triggers.

In some embodiments, the first condition is a single trigger condition that is associated with the plurality of triggers. For example, a decision inequality of the first condition is related to the plurality of triggers, such as the decision inequality of the first condition being related to both measurement and location, or the decision inequality of the first condition being related to both measurement and time, etc.

In some embodiments, the first condition consists of a plurality of trigger conditions that are associated with the plurality of triggers. For example, the first condition may include two decision inequalities, where one decision inequality is related to measurement and the other decision inequality is related to location; or the first condition may include two decision inequalities, where one decision inequality is related to measurement and the other decision inequality is related to time, etc.

The embodiments of the present disclosure do not specifically limit the plurality of triggers associated with the first condition. Exemplarily, the plurality of triggers may include at least two of: a measurement-based trigger, a location-based trigger, a time/timer-based trigger, and an elevation angle-based trigger.

In other words, in the embodiments of the present disclosure, the first condition may include at least two of: a measurement-based trigger condition, a location-based trigger condition, a time/timer-based trigger condition, and an elevation angle-based trigger condition.

It should be noted that in some embodiments, the first condition may be a single condition that includes a trigger condition of the plurality of triggers. For example, the single condition may include a measurement-based and location-based trigger condition, or the single condition may include a location-based and elevation angle-based trigger condition, etc. However, the embodiments of the present disclosure are not limited thereto, in some embodiments, the first condition may consist of a plurality of conditions that include trigger conditions of the plurality of triggers.

As an example, the plurality of triggers may include the measurement-based trigger and the location-based trigger. For example, in NTN scenarios, the plurality of triggers may include the measurement-based trigger and the location-based trigger. In other words, in NTN scenarios, the first condition may be the measurement-based and location-based trigger condition. The measurement-based and location-based trigger condition may comprehensively consider the impact of channel conditions and the locations of the terminal device and the network device on the cell handover, thereby enhancing the reliability of the cell handover.

As another example, the plurality of triggers may include the measurement-based trigger and the elevation angle-based trigger. In other words, the first condition may be a measurement-based and elevation angle-based trigger condition. The measurement-based and elevation angle-based trigger condition can be better suited for irregularly shaped handover regions, enhancing the reliability of the handover of the terminal device in irregularly shaped handover regions.

As yet another example, the plurality of triggers may include the measurement-based trigger, the location-based trigger, and the time/timer-based trigger. In other words, the first condition may be a measurement-based, location-based, and time/timer-based trigger condition.

In the embodiments of the present disclosure, the terminal device is able to trigger the sending of the measurement report based on the first condition associated with the plurality of triggers, meaning that the terminal device is able to jointly trigger measurement reporting based on the first condition associated with the plurality of triggers. Compared to measurement reporting triggered by the condition associated with a single trigger, measurement reporting triggered by the condition associated with the plurality of triggers can comprehensively consider various factors affecting the cell handover, which is beneficial for avoiding or reducing unnecessary handovers and ping-pong handovers.

Moreover, compared to measurement reporting triggered by the condition associated with a single trigger, measurement reporting triggered by the condition associated with the plurality of triggers is advantageous in reducing the signaling overhead required for handover preparation. This is because, if measurement reporting is triggered by the condition associated with a single trigger, there may be many candidate cells that satisfy the condition associated with that single trigger, and the signaling required for handover preparation needs to include information about all candidate cells that satisfy the condition associated with that single trigger, leading to significant signaling overhead required for handover preparation. In contrast, using measurement reporting triggered by the condition associated with the plurality of triggers allows for considering various factors to filter candidate cells that meet the condition associated with the plurality of triggers, which is beneficial for excluding some poorly conditioned candidate cells, thereby saving signaling overhead required for handover preparation.

In some embodiments, the first condition may be associated with measurement information and location information, meaning that the first condition is the measurement-based and location-based trigger condition. However, the embodiments of the present disclosure are not limited thereto, for example, the first condition may be associated with measurement and time, meaning that the first condition is the measurement-based and time-based trigger condition; or the first condition may be associated with location, time, and elevation angle, meaning that the first condition is the location-based, time-based, and elevation angle-based trigger condition, etc.

In some embodiments, the first condition may be associated with one or more of: a first position offset, a measurement result of the serving cell, a measurement result of a first candidate cell, and a hysteresis parameter of a trigger event corresponding to the first condition. The following provides a detailed introduction to this.

In some embodiments, the first condition may be associated with the first position offset. The first position offset may be used to indicate one or more of: a position offset between the terminal device and the serving cell, and a position offset between the terminal device and the first candidate cell. In some embodiments, the position offset between the terminal device and the first candidate cell may also be understood as a position offset between the terminal device and a neighbor cell.

As an example, the first position offset may be used to indicate the position offset between the terminal device and the serving cell. As another example, the first position offset may be used to indicate the position offset between the terminal device and the first candidate cell. As yet another example, the first position offset may be used to indicate both the position offset between the terminal device and the serving cell and the position offset between the terminal device and the first candidate cell.

In some embodiments, the first candidate cell may be one of one or more candidate cells configured for the terminal device by the serving cell. For example, the first candidate cell may be any one of the one or more candidate cells.

In some embodiments, the first position offset is dynamically changed. For example, the first position offset may vary at different times. As an example, in NTN scenarios or other scenarios where the terminal device moves relative to the cell, the first position offset may be dynamically changed.

In some embodiments, the first position offset used to indicate the position offset between the terminal device and the serving cell may also be understood as the first position offset used to indicate a relative displacement between the terminal device and the serving cell. As an example, the first position offset may indicate a relative positional relationship between the serving cell and the terminal device, such as the serving cell being relatively far from the terminal device, or the serving cell being relatively close to the terminal device, or both being relatively stationary, etc. As another example, the first position offset may indicate a relative distance between the serving cell and the terminal device. As yet another example, the first position offset may simultaneously indicate the relative positional relationship and relative distance between the serving cell and the terminal device, such as the first position offset used to indicate that the serving cell is away from the terminal device and the current distance between them is 100 meters, etc.

In some embodiments, the first position offset used to indicate the position offset between the terminal device and the first candidate cell (or neighbor cell) may also be understood as the first position offset used to indicate a relative displacement between the terminal device and the first candidate cell. For example, the first position offset may indicate a relative positional relationship and/or relative distance between the terminal device and the first candidate cell.

In the embodiments of the present disclosure, introducing the first position offset into the first condition helps determine the target cell for the terminal device's handover based on the relative displacement between the terminal device and the serving cell/candidate cell, which is beneficial for excluding some candidate cells that are moving away from the terminal device as the target cell for handover, thereby avoiding or reducing the occurrence of unnecessary handovers and ping-pong handovers.

In some embodiments, in addition to being associated with the first position offset, the first condition may also be associated with various information. For example, the first condition may also be associated with one or more of: the measurement result of the serving cell, the measurement result of the first candidate cell, and the hysteresis parameter of the trigger event corresponding to the first condition.

As an example, the first condition may be associated with both the first position offset and the measurement result of the serving cell. For example, the first condition may include that a sum of the measurement result of the serving cell and the first position offset is not greater than a certain threshold.

As another example, the first condition may be associated with both the first position offset and the measurement result of the first candidate cell. For example, the first condition may include that the measurement result of the first candidate cell is greater than a certain threshold, and the first position offset is less than another threshold.

As yet another example, the first condition may be associated with the first position offset, the measurement result of the serving cell, and the measurement result of the first candidate cell. For example, the first condition may include that the sum of the measurement result of the serving cell and the first position offset is not greater than the measurement result of the first candidate cell.

As yet another example, the first condition may be associated with the first position offset, the measurement result of the serving cell, the measurement result of the first candidate cell, and the hysteresis parameter of the trigger event corresponding to the first condition. For example, the first condition may include that a sum of the measurement result of the serving cell, the first position offset, and the hysteresis parameter of the trigger event corresponding to the first condition is not greater than the measurement result of the first candidate cell.

It should be noted that the association of the first condition with certain information may be understood as the first condition being related to that information, or the first condition being generated/determined based on that information, or that information being considered when determining the first condition. For example, the association of the first condition with the first position offset may be understood as the first condition being related to the first position offset, or the first condition being a trigger condition generated or determined based on the first position offset, or the first position offset being considered as information/factor when determining the first condition.

In some embodiments, the first condition includes: $M_n(t) > M_p(t) + Hys + Y_{n,p}(t - \tau, t)$, where $M_n(t)$ represents a measurement result of the first candidate cell at time t, $M_p(t)$ represents a measurement result of the serving cell at time t, $Hys$ represents a hysteresis parameter of a trigger event corresponding to the first condition, and $Y_{n,p}(t-\tau,t)$ represents a first position offset. Alternatively, in some embodiments, when triggering the measurement report based on the first condition, the decision inequality for the measurement report is: $M_n(t) > M_p(t) + Hys + Y_{n,p}(t - \tau, t)$.

In some embodiments, the first condition may be applicable to NTN scenarios. For example, the serving cell and/or the first candidate cell may be earth-moving cells. That is to say, the embodiments of the present disclosure may set the position offset as a dynamic position offset (such as a dynamic position offset of the earth-moving cell) to better adapt to scenarios where the terminal device and the cell are moving relative to each other.

The embodiments of the present disclosure do not specifically limit the types of measurement results of the serving cell and/or the first candidate cell. Exemplarily, the measurement results of the serving cell and/or the first candidate cell may be measurement results related to cell received power and/or cell quality. As an example, the measurement results of the serving cell and/or the first candidate cell may be one or more of: RSRP, RSRQ, and RS-SINR.

In some embodiments, the types of measurement results of the serving cell and the first candidate cell are the same. For example, both measurement results may be RSRP. Alternatively, both measurement results may be RSRP and RSRQ.

The embodiments of the present disclosure do not specifically limit the type of the reference signal used for measurement. Taking the reference signal used for measurement being a single RS type as an example, the RS used for measurement may be SSB, or may be CSI-RS.

The embodiments of the present disclosure do not limit the method for determining the hysteresis parameter of the trigger event corresponding to the first condition. For example, the hysteresis parameter may be configured by the network device (such as a network device to which the serving cell belongs), e.g., configured by the network device through RRC signaling (such as *ReportConfig* signaling). However, the embodiments of the present disclosure are not limited thereto, the hysteresis parameter may also be predefined by the protocol or preconfigured, etc.

The following provides an exemplary introduction to the method for determining the first position offset.

In some embodiments, the first position offset may be associated with a variety of information. For example, the first position offset may be associated with one or more of: the position offset between the terminal device and the serving cell, the position offset between the terminal device and the first candidate cell, an empirical coefficient of a cell position offset, and an offset factor corresponding to the first candidate cell.

As an example, the first position offset may be associated with the position offset between the terminal device and the first candidate cell, in order to determine a relative positional relationship between the first candidate cell and the terminal device based on the first position offset, such as determining whether the first candidate cell is moving away from the terminal device, thereby facilitating the determination of whether to execute the handover of the terminal device to the first candidate cell based on the first position offset.

As another example, the first position offset may be associated with the position offset between the terminal device and the serving cell, and the offset between the terminal device and the first candidate cell. For example, the first position offset may equal a ratio of the offset between the terminal device and the first candidate cell to the position offset between the terminal device and the serving cell.

As yet another example, the first position offset may be associated with the position offset between the first candidate cell and the terminal device, and the offset factor corresponding to the first candidate cell. For example, the first position offset may equal a sum of the position offset between the first candidate cell and the terminal device and the offset factor corresponding to the first candidate cell.

As yet another example, the first position offset may be associated with the position offset between the terminal device and the serving cell, the position offset between the terminal device and the first candidate cell, the empirical coefficient of cell position offset, and the offset factor corresponding to the first candidate cell.

In some embodiments, the first position offset is indicated by one or both of: a position offset between the terminal device and a reference position of the serving cell, and a position offset between the terminal device and a reference position of the first candidate cell. In other words, a position of the cell may be indicated by a reference position of the cell. For example, the position of the serving cell may be indicated by the reference position of the serving cell, based on which, the position offset between the terminal device and the serving cell may be indicated by the position offset between the terminal device and the reference position of the serving cell. Alternatively, the position of the first candidate cell may be indicated by the reference position of the first candidate cell, based on which, the position offset between the terminal device and the first candidate cell may be indicated by the position offset between the terminal device and the reference position of the first candidate cell.

In some embodiments, the terminal device may determine the first position offset based on its own positioning information and reference position information of the cell. For example, the terminal device may determine the first position offset based on its own positioning information, reference position information of the serving cell, and reference position information of the first candidate cell.

The embodiments of the present disclosure do not limit the method for the terminal device obtaining its own positioning information. For example, the terminal device may use a global positioning system (GPS) to obtain its own positioning information. Alternatively, the terminal device may use the base station for positioning to obtain its own positioning information, etc.

In some embodiments, the first position offset may be expressed as:

$$Y_{n,p}(t-\tau,t) = \begin{cases} \rho \cdot \dfrac{\Delta\upsilon_n(t-\tau,t)}{\Delta\upsilon_p(t-\tau,t)} & \Delta\upsilon_p(t-\tau,t) > 0 \\ n_{penalty} & otherwise \end{cases} \quad \text{(Formula 1)}$$

where $Y_{n,p}(t-r, t)$ represents the first position offset, $\Delta\upsilon_n(t-\tau, t)$ represents the position offset between the terminal device and the first candidate cell, $\Delta\upsilon_p(t-\tau, t)$ represents the position offset between the terminal device and the serving cell, $p$ represents a first empirical coefficient of the cell position offset, and $n_{penalty}$ represents the offset factor corresponding to the first candidate cell.

In some embodiments, when $\Delta\upsilon_p(t-\tau,t) > 0$, it indicates that the serving cell is moving away from the terminal device. In this case, a symbol of the first position offset is determined by a relative movement state between the first candidate cell and the terminal device.

In some embodiments, the empirical coefficient of the cell position offset may refer to an empirical coefficient of position offset for the earth-moving cell. For example, the first empirical coefficient of the cell position offset may refer to a first empirical coefficient of the position offset for the earth-moving cell.

The embodiments of the present disclosure do not limit the method for determining the empirical coefficient of the cell position offset. For example, it may be determined through simulation methods for empirical coefficients of cell position offsets corresponding to different types of cells. Alternatively, the empirical coefficients of cell position offsets corresponding to different types of cells may be configured by the network, etc.

In some embodiments, $\Delta\upsilon_n(t-\tau,t)$ and $\Delta\upsilon_p(t-\tau,t)$ may be calculated respectively using formulas (2) and (3).

$$\Delta\upsilon_n(t-\tau,t) = \Delta\upsilon_n(t) - \Delta\upsilon_n(t-\tau) \quad \text{(Formula 2)}$$

where $\Delta\upsilon_n(t) - \Delta\upsilon_n(t-\tau)$ represents a position offset (relative displacement) between the terminal device and the first candidate cell within time $\tau$.

As an implementation, in NTN scenarios, the position offset between the terminal device and the first candidate cell within time $\tau$ may be obtained through ephemeris information and the positioning information of the terminal device.

$$\Delta\upsilon_p(t-\tau,t) = \Delta\upsilon_p(t) - \Delta\upsilon_p(t-\tau) \quad \text{(Formula 3)}$$

where $\Delta\upsilon_p(t) - \Delta\upsilon_p(t-\tau)$ represents a position offset (relative displacement) between the terminal device and the serving cell within time $\tau$.

As an implementation, in NTN scenarios, the position offset between the terminal device and the serving cell within time $\tau$ may be obtained through ephemeris information and the positioning information of the terminal device.

In some embodiments, the above ephemeris information may be sent from the serving cell (such as a serving satellite) to the terminal device, for example, the serving cell may send the ephemeris information to the terminal device through a system message.

In some embodiments, the above ephemeris information is sent to the terminal device in advance by the serving cell.

In some embodiments, the above ephemeris information may include one or more types of information, such as movement velocity information of the satellite, reference position information of the satellite, etc. As an example, the ephemeris information may include a movement velocity of a low Earth orbit satellite moving along a predefined orbit, as well as a relative azimuth and distance between the reference position and a sub-satellite point.

The embodiments of the present disclosure do not limit the movement state of the terminal device. For example, the terminal device may be stationary relative to the ground or may be moving relative to the ground. It should be noted that, in NTN scenarios, regardless of whether the terminal device is stationary or moving relative to the ground, the movement state of the terminal device may be negligible compared to the movement of the satellite, that is, when the terminal device moves at a velocity v relative to the reference position of the cell (or relative to the ground), the velocity v may be negligible (velocity v=0).

As mentioned above, the first position offset may be associated with the offset factor corresponding to the first candidate cell. The following introduces the offset factor corresponding to the first candidate cell.

In some embodiments, the offset factor corresponding to the cell may also be referred to as an offset penalty amount or offset penalty value corresponding to the cell, and the embodiments of the present disclosure do not distinguish between these terms. For example, the offset factor corresponding to the first candidate cell may also be referred to as the offset penalty amount corresponding to the first candidate cell.

In some embodiments, the offset factor corresponding to the first candidate cell may be used to indicate a probability of the first candidate cell being the target cell. For example, the larger the offset factor corresponding to the first candidate cell, the smaller the probability of the first candidate cell being the target cell. Conversely, the smaller the offset factor corresponding to the first candidate cell, the greater the probability of the first candidate cell being the target cell.

In some embodiments, the offset factor corresponding to the first candidate cell is related to the relative displacement between the serving cell and the terminal device. For example, when $\Delta v_p(t-\tau, t) > 0$, the offset factor corresponding to the first candidate cell may be 0, because when $\Delta v_p(t-\tau,t) > 0$, it indicates that the serving cell is moving away from the terminal device. Then, compared to the serving cell, the first candidate cell is more likely to be a handover target, thus the offset factor corresponding to the first candidate cell may not be set. Alternatively, when $\Delta v_p(t-\tau, t) < 0$, the offset factor corresponding to the first candidate cell may be greater than 0, because when $\Delta v_p(t-\tau, t) < 0$, it indicates that the serving cell is moving closer to the terminal device. Then, compared to the serving cell, the first candidate cell is less likely to be the handover target, thus a larger offset factor may be set for the first candidate cell.

In some embodiments, the offset factor corresponding to the first candidate cell is related to the relative displacement between the first candidate cell and the terminal device.

In some embodiments, the offset factor corresponding to the first candidate cell is related to both the relative displacement between the first candidate cell and the terminal device and the relative displacement between the serving cell and the terminal device.

In some embodiments, the offset factor corresponding to the first candidate cell satisfies the following formula:

$$n_{penalty} = \begin{cases} \rho' \cdot (\Delta v_p(t-\tau,t) - \dfrac{\Delta v_n(t-\tau,t)}{\Delta v_p(t-\tau,t)})^2, & \Delta v_p(t-\tau,t) < 0 \\ 0, & \Delta v_p(t-\tau,t) > 0 \end{cases}$$

where $\rho'$ represents a second empirical coefficient of the cell position offset.

That is to say, when $\Delta v_p(t-\tau,t) < 0$, the offset factor is set to $\rho' \cdot (\Delta v_p(t-\tau,t) - \dfrac{\Delta v_n(t-\tau,t)}{\Delta v_p(t-\tau,t)})^2$, indicating that the probability of the first candidate cell being the target cell decreases during this measurement period; otherwise, the offset factor is 0.

In some embodiments, the second empirical coefficient of the cell position offset may refer to a second empirical coefficient of the position offset for the earth-moving cell.

In some embodiments, the second empirical coefficient of the cell position offset may be equal to the first empirical coefficient of the cell position offset.

In some embodiments, the second empirical coefficient of the cell position offset may not be equal to the first empirical coefficient of the cell position offset. For example, the second empirical coefficient of the cell position offset may be greater than the first empirical coefficient of the cell position offset.

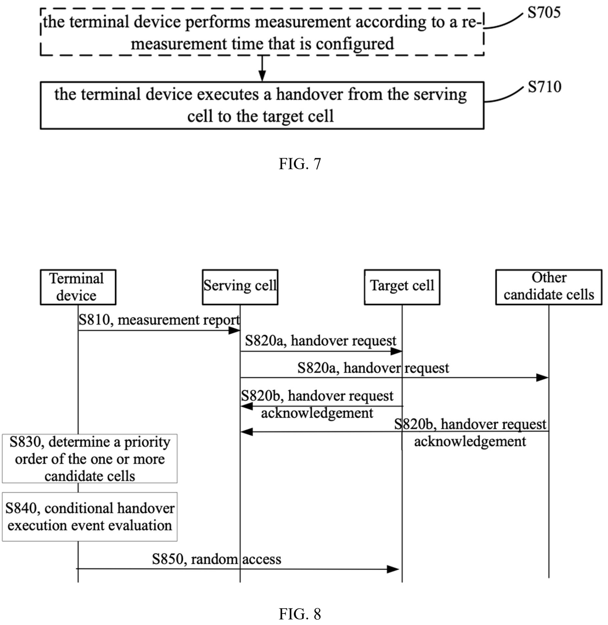

The above describes the method for the terminal device performing the measurement reporting based on the first condition in conjunction with FIG. 6. The following introduces the method for the terminal device executing the handover based on the second condition in conjunction with FIG. 7.

FIG. 7 is a flowchart of a wireless communication method provided by another embodiment of the present disclosure. The method shown in FIG. 7 is introduced from the perspective of interaction among the terminal device, serving cell (also referred to as source cell), and target cell.

The method shown in FIG. 7 may include operation S710. At operation S710, the terminal device executes a handover from a serving cell to a target cell.

In the embodiments of the present disclosure, the handover is triggered based on a second condition. The second condition is associated with a plurality of triggers.

For example, the plurality of triggers may include one or more of: a measurement-based trigger, a location-based trigger, a time/timer-based trigger, and an elevation angle-based trigger.

In some embodiments, the second condition may be associated with the measurement-based trigger and location-based trigger. That is to say, the second condition may be a measurement-based and location-based condition.

In some embodiments, the second condition may be a single condition that may be associated with the plurality of triggers. For example, this single condition may be a measurement-based and location-based condition.

In some embodiments, the second condition may consist of a plurality of conditions that may be associated with the plurality of triggers. For example, the plurality of conditions may include a measurement-based condition and a location-based condition.

The content regarding the plurality of triggers and the association of the second condition with the plurality of triggers is similar to that introduced earlier regarding the plurality of triggers and the association of the first condition with the plurality of triggers. Relevant content may be referenced in the previous introduction, and for the sake of brevity, it is not repeated here.

In some embodiments, the second condition is associated with the first position offset. Relevant introductions regarding the first position offset may be found in the previous content and are not repeated here.

In some embodiments, the second condition may be associated with one or more of: a measurement result of the serving cell, a measurement result of the first candidate cell, and a hysteresis parameter of a trigger event corresponding to the first condition.

In some embodiments, the second condition may include $M_n(t) > M_p(t) + Hys + Y_{n,p}(t-\tau, t)$, where $M_n(t)$ represents a measurement result of the first candidate cell at time t, $M_p(t)$ represents a measurement result of the serving cell at time t, Hys represents a hysteresis parameter corresponding to a trigger event of the second condition, and $Y_{n,p}(t-\tau, t)$ represents the first position offset.

In some embodiments, the second condition is used to trigger the terminal device to execute the handover, and therefore, the second condition may also be referred to as a handover execution condition, a handover trigger condition, etc. For example, the second condition may be a CHO execution condition.

In some embodiments, the terminal device executes the handover from the serving cell to the target cell based on the traditional handover mechanism. In some embodiments, the terminal device executes the handover from the serving cell to the target cell based on the conditional handover mechanism. For example, in an NTN scenario, the terminal device may execute the handover from the serving cell to the target cell based on the conditional handover mechanism.

In some embodiments, the second condition may include the first condition. That is to say, the handover execution condition may include the trigger condition. For example, the second condition may include one or two first conditions. However, the embodiments of the present disclosure are not limited thereto, in some embodiments, the second condition may include more than two first conditions.

In some embodiments, the second condition may be the same as the first condition. For example, both the second condition and the first condition may be a measurement-based and location-based condition. Alternatively, both the second condition and the first condition may be a measurement-based and elevation angle-based condition, etc.

In some embodiments, a threshold corresponding to the second condition and a threshold corresponding to the first condition may also be the same, or in other words, the second condition and the first condition may be completely identical conditions. For example, both the second condition and the first condition may be a measurement-based and location-based decision inequality greater than a certain threshold.

However, the embodiments of the present disclosure are not limited thereto, in some embodiments, the second condition and the first condition may differ. For example, the second condition may include other conditions in addition to the first condition.

In some embodiments, the target cell to which the terminal device is handed over is one of one or more candidate cells corresponding to the terminal device. For example, the target cell may be the first candidate cell mentioned above.

In some embodiments, the one or more candidate cells corresponding to the terminal device may refer to one or more candidate cells configured by the serving cell for the terminal device or may refer to a portion of the one or more candidate cells configured by the serving cell for the terminal device.

In some embodiments, the one or more candidate cells corresponding to the terminal device may refer to one or more candidate cells reported by the terminal device to the serving cell, e.g., one or more candidate cells reported by the terminal device to the serving cell that meet the first condition.

In some embodiments, the target cell is determined by the terminal device according to a priority order of the one or more candidate cells. The target cell is determined based on the priority order of the one or more candidate cells in the embodiments of the present disclosure, which is beneficial for selecting a candidate cell with a higher priority as the target cell, thereby reducing the probability of handover instability or handover failure caused by changes in network communication status.

The embodiments of the present disclosure do not impose specific limitations on the method for determining the priority order of one or more candidate cells. In some embodiments, the priority order of one or more candidate cells may be configured by the network. In some embodiments, the priority order of one or more candidate cells may be determined by the terminal device.

In some embodiments, when determining the priority order of one or more candidate cells, the channel quality of the cell and/or the service capability of the cell may be considered.

In some embodiments, the priority order of one or more candidate cells may be determined based on first information. The first information may include one or more of: an available spectrum resource of one or more candidate cells, a service time of one or more candidate cells for the terminal device, and a measurement result of one or more candidate cells.

That is to say, the determination of the priority order of one or more candidate cells may consider one or more of the following factors: a duration of cell coverage for the terminal device, a signal-to-interference plus noise ratio (SINR) of the received signal, and a available service link resource of the cell, etc. The service time of one or more candidate cells for the terminal device may be used to indicate the duration of cell coverage for the terminal device, the measurement result of one or more candidate cells may indicate the SINR of the received signal, and the available spectrum resource of one or more candidate cells may be used to indicate the available service link resource of the cell. The first information is introduced below.

In some embodiments, part or all of the first information is determined by the serving cell based on the resource allocated by the one or more candidate cells to the terminal device. For example, if a certain candidate cell among the one or more candidate cells determines that the terminal device is able to be handed over to that candidate cell, it may send a handover request confirmation signaling to the serving cell, while carrying the resource allocated to the terminal device in that signaling, to enable the serving cell to determine the part or all of the first information based on the allocated resource.

In some embodiments, the resource allocated by one or more candidate cells to the terminal device may include system information such as the available spectrum resource, the service time (e.g., service time threshold), etc., in order to determine the available spectrum resource and service time of one or more candidate cells for the terminal device.

In some embodiments, part or all of the first information may be carried in a reconfiguration message sent by the serving cell, e.g., carried in an RRC reconfiguration message.

In some embodiments, the available spectrum resource of one or more candidate cells may be carried in the reconfiguration message, e.g., carried in an RRC reconfiguration (*RRC.Reconfig*) signaling. As an example, a parameter (e.g., *availableTargetFreqBand*) may be added to a serving cell common configuration (*servingCellConfigCommon*) signaling included in the *RRC.Reconfig* signaling to indicate the available spectrum resource of one or more candidate cells through the parameter. In this way, the available spectrum resource of one or more candidate cells may be used as a service capability factor to determine the priority order of one or more candidate cells.

In some embodiments, the service time (also referred to as a critical service time of one or more candidate cells, used to indicate a time when one or more candidate cells provide service for the terminal device) of one or more candidate cells for the terminal device may be carried in the reconfiguration message. As an example, a parameter (e.g., *thresh_t*) may be added to a conditional reconfiguration add modification (*condReconfigToAddMod*) signaling to indicate the service time of one or more candidate cells for the terminal device through the parameter. In this way, the service time of one or more candidate cells for the terminal device may be used as a service capability factor (e.g., service continuity) to determine the priority order of one or more candidate cells.

In some embodiments, the service time of one or more candidate cells for the terminal device is directly indicated by the serving cell, i.e., the serving cell may directly indicate the time when one or more candidate cells are able to provide service for the terminal device.

In some embodiments, the service time of one or more candidate cells for the terminal device is indirectly indicated by the serving cell. For example, the serving cell may indicate a service time threshold of one or more candidate cells, and the terminal device may determine the service time of one or more candidate cells for the terminal device based on a service stop time of the serving cell and the service time threshold of one or more candidate cells. As an example, for a certain candidate cell among the one or more candidate cells, its service time for the terminal device may be determined by the formula: $T_u^l = thresh\_t_l - thresh\_t_p$, where $T_u^l$ represents a service time of candidate cell *l* for the terminal device, *thresh_t$_l$* represents a service time threshold of candidate cell *l,* and *thresh_t$_p$* represents a time when the serving cell stops serving the terminal device.

In some embodiments, the service time threshold of candidate cell *l* may be determined based on system information of a second candidate cell. In some embodiments, the service time threshold of candidate cell *l* may be sent by the serving cell to the terminal device through the reconfiguration message (e.g., RRC reconfiguration message).

In some embodiments, the time when the serving cell stops serving the terminal device may be sent by the serving cell to the terminal device through the reconfiguration message (e.g., RRC reconfiguration message).

In some embodiments, the service time of one or more candidate cells for the terminal device may be used to evaluate the service continuity of the one or more candidate cells for the terminal device.

In this way, the terminal device may determine the priority order of one or more candidate cells (e.g., prioritize one or more candidate cells) based on RRM measurement information, and available spectrum resource information and service time information of the candidate cell, thereby selecting a candidate cell with more stable service quality as the target cell for handover based on the priority order, which improves the reliability of the handover.

In some embodiments, the priority order of one or more candidate cells is determined based on a first target value corresponding to each of the one or more candidate cells. The first target value corresponding to each of the candidate cells is introduced below.

In some embodiments, the larger the first target value, the higher a priority of a candidate cell corresponding to the first target value.

In some embodiments, the first target value is determined based on one or more of: the duration of cell coverage for the terminal device, the SINR of the received signal, and the available service link resource of the cell, etc.

As an example, the determination of the first target value is related to the duration of cell coverage for the terminal device. For example, the longer the duration of cell coverage for the terminal device, the larger the first target value. Conversely, the shorter the duration of cell coverage for the terminal device, the smaller the first target value.

As another example, the determination of the first target value is related to the SINR of the received signal. For example, the larger the SINR of the received signal, the smaller the first target value. Conversely, the smaller the SINR of the received signal, the larger the first target value.

As yet another example, the determination of the first target value is related to the available service link resource of the cell. For example, the more available service link resource of the cell, the larger the first target value. Conversely, the fewer the available service link resource of the cell, the smaller the first target value.

As yet another example, the determination of the first target value is related to both the duration of cell coverage for the terminal device and the available service link resource of the cell. For example, the longer the duration of cell coverage for the terminal device and the more the available service link resource of the cell, the larger the first target value. Conversely, the shorter the duration of cell coverage for the terminal device and the fewer the available service link resource of the cell, the smaller the first target value.

Taking the second candidate cell among one or more candidate cells as an example, the method for determining a first target value corresponding to the second candidate cell is exemplified. It should be understood that the second candidate cell may be any candidate cell among the one or more candidate cells. In some embodiments, the second candidate cell and the first candidate cell mentioned above may be the same candidate cell or different candidate cells, which is not limited in the present disclosure.

In some embodiments, the first target value is determined based on the following formula:

$$F_u^l = \alpha \times \frac{T_u^l}{T_{\max}} + \mu \times \frac{10^{\frac{S_u^l}{10}}}{10^{\frac{S_{\max}}{10}}} + \gamma \times \frac{R_u^l}{R_{\max}}$$

where $F_u^l$ represents the first target value corresponding to the second candidate cell, $T_u^l$ represents a time when the second candidate cell covers the terminal device, $T_{\max}$ represents a longest time when the terminal device is covered by a single cell, $S_u^l$ represents a signal-to-interference plus noise ratio between the second candidate cell and the terminal device, $S_{\max}$ represents a maximum value of a signal-to-interference plus noise ratio between the single cell and the terminal device, $R_u^l$ represents an available service link rate between the second candidate cell and the terminal device, $R_{\max}$ represents a maximum service link rate between the single cell and the terminal device, and $\alpha$, $\mu$, and $\gamma$ represent weights of a cell service time, a signal-to-interference plus noise ratio, and a service link rate, respectively.

In some embodiments, the system may dynamically adjust the weights of the three factors mentioned above according to different user needs to ensure better handover performance of the system. For example, the system may dynamically adjust the values of $\alpha$, $\mu$, and $\gamma$ to ensure better handover performance of the system.

In some embodiments, the larger the value of $F_u^l$, the better the overall performance of these three factors, and the higher a priority of a candidate cell corresponding to $F_u^l$. That is to say, a cell with a larger value of $F_u^l$ may be prioritized when selecting the target cell.

In some embodiments, for example, in an NTN scenario, the value of $T_{max}$ may be calculated based on a cell radius and a cell moving speed. In some embodiments, the cell radius and the cell moving speed may be included in the ephemeris information sent by the serving cell.

In some embodiments, the SINR between the second candidate cell and the terminal device may include a measurement result (e.g., RSRQ, RS-SINR, etc.) obtained from a second measurement. The details of the second measurement are introduced later and not elaborated here.

In some embodiments, the maximum value of the SINR between the single cell and the terminal device may be configured by the network or predefined by the protocol.

The embodiments of the present disclosure do not impose specific limitations on the method for determining the available service link rate between the candidate cell and the terminal device. Taking the second candidate cell among one or more candidate cells as an example, the method for determining the available service link rate between the second candidate cell and the terminal device is provided.

In some embodiments, the available service link rate between the second candidate cell and the terminal device may be determined based on one or more of: an available spectrum resource allocated by the second candidate cell to the terminal device, a spectrum efficiency of the terminal device, whether a service link exists between the second candidate cell and the terminal device, and an available service capacity of the second candidate cell. For example, the available service link rate between the second candidate cell and the terminal device may be determined based on the available spectrum resource allocated by the second candidate cell to the terminal device and whether the service link exists between the second candidate cell and the terminal device. Alternatively, the available service link rate between the second candidate cell and the terminal device may be determined based on the available spectrum resource allocated by the second candidate cell to the terminal device and the spectrum efficiency of the terminal device, etc.

In some embodiments, the available service link rate between the second candidate cell and the terminal device satisfies the following formula:

$$R_u^l = \lambda_u^l \cdot B_u^l \cdot E_u^l, \quad \forall u \in U$$

$$s.t. \sum_{u \in U} R_u^l \leq Z^l, \quad \forall l \in L$$

where $B_u^l$ represents the available spectrum resource allocated by the second candidate cell to the terminal device, $E_u^l$ represents the spectrum efficiency of the terminal device, $\lambda_u^l$ represents whether the service link exists between the second candidate cell and the terminal device, $Z^l$ represents the available service capacity of the second candidate cell, and $\sum_{u \in U} R_u^l \leq Z^l$ represents a total service link rate between the second candidate cell and each terminal device not exceeding the available service capacity of the second candidate cell.

In some embodiments, the available spectrum resource allocated by the second candidate cell to the terminal device may include an available spectrum bandwidth (Hz) allocated by the second candidate cell to the terminal device.

In some embodiments, the available spectrum resource allocated by the second candidate cell to the terminal device may be determined based on the system information of the second candidate cell. In some embodiments, the available spectrum resource allocated by the second candidate cell to the terminal device may be sent by the serving cell to the terminal device through the reconfiguration message (e.g., RRC reconfiguration message).

In some embodiments, $\lambda_u^l$ may be represented using a Boolean type. For example, when $\lambda_u^l = 1$, it indicates that the service link exists between the second candidate cell and the terminal device; and when =0, it indicates that no service link exists between the second candidate cell and the terminal device. However, the embodiments of the present disclosure are not limited thereto, for example, when $\lambda_u^l = 0$, it indicates that the service link exists between the second candidate cell and the terminal device; and when =1, it indicates that no service link exists between the second candidate cell and the terminal device. Alternatively, when the value of $\lambda_u^l$ is true, it indicates that the service link exists between the second candidate cell and the terminal device; and when the value of $\lambda_u^l$ is false, it indicates that no service link exists between the second candidate cell and the terminal device, etc.

Continuing to refer to FIG. 7, in some embodiments, the method shown in FIG. 7 may further include operation S705. At operation S705, the terminal device performs a measurement based on a re-measurement time that is configured.

In some embodiments, the terminal device performing the measurement based on the configured re-measurement time may be referred to as a second measurement. The first measurement refers to a measurement performed when the terminal device performs the measurement report based on the first condition.

In some embodiments, operation S705 may be executed prior to operation S710.

In the embodiments of the present disclosure, the configuration of the re-measurement time enables the terminal device to timely update the condition or event (second condition) used for making the handover decision before receiving the reconfiguration signaling, thereby helping to reduce the impact of delays caused by beam sweeping and Layer 3 filtering during the handover decision. The following describes the re-measurement time.

In some embodiments, the re-measurement time is configured based on one or both of: a time when the terminal device periodically sends the measurement report, and a time when the terminal device receives a reconfiguration message sent by the serving cell. In some embodiments, the reconfiguration message received by the terminal device from the serving cell includes access resource information configured by the target cell for the terminal device.

Alternatively, the re-measurement time is determined based on the time when the terminal device periodically sends the measurement report and/or the time when the terminal device receives the RRC reconfiguration signaling.

In some embodiments, the re-measurement time is a smaller value of the time when the terminal device periodically sends the measurement report and the time when the terminal device receives the reconfiguration message (e.g., *RRC.Reconfig* signaling). In other words, the re-measurement time may be determined by the smaller value of the time when the terminal device periodically sends the measurement report (e.g., a minimum time interval *ReportInterval* triggered by time) and the time when the terminal device receives the *RRC.Reconfig* signaling.

In some embodiments, the terminal device is able to perform the second measurement based on the configured re-measurement time to obtain an updated measurement result, such as updated RS-SINR, RSRP values, etc.

In some embodiments, the re-measurement time may be carried in the signaling (e.g., *ReportConfig* signaling) used for configuring the measurement report. Taking the re-measurement time being carried in the *ReportConfig* signaling as an example, as an implementation, a parameter (e.g., *time-to-remeasure* parameter) may be added to the *ReportConfig* signaling, and the parameter is used to indicate the re-measurement time for the terminal device.

Based on this, the terminal device may perform the measurement based on the re-measurement time to determine whether the second condition (handover execution condition) is met according to the updated measurement result. When the second condition is met, the terminal device may execute the handover from the serving cell to the target cell.

The above have introduced the method embodiments of the present disclosure. For ease of understanding, the following provides exemplary introductions to operations of the method embodiments of the present disclosure in conjunction with FIG. 8 to FIG. 12.

It should be noted that the operations shown below are for the purpose of facilitating understanding of the embodiments of the present disclosure and do not limit the technical solutions of the present disclosure.

It should also be noted that the operations shown below are optional operations, and some of these operations may also constitute separate embodiments. For example, operation S810 may be a separate embodiment, or operations S810 and S850 may constitute a separate embodiment, etc.

It should be noted that the examples below are only for introducing the operations that the embodiments of the present disclosure may involve. Detailed technical content regarding the operations may be referred to in the previous descriptions and are not repeated here.

It should also be noted that the examples below are introduced based on the NTN scenario, but the embodiments of the present disclosure are not limited to being applied only in the NTN scenario. For example, in the TN scenario, the embodiments of the present disclosure are still applicable. Additionally, the examples below are introduced based on the CHO, but the embodiments of the present disclosure are not limited to being applied only in the CHO. For example, in the traditional handover mechanism, the embodiments of the present disclosure are still applicable.

FIG. 8 is another schematic flowchart of a method for wireless communication provided in an embodiment of the present disclosure. The method shown in FIG. 8 may include operations S810 to S850.

At operation S810, the terminal device performs a first measurement and reports a measurement result.

In some embodiments, the terminal device may perform the first measurement of handover measurement information for the serving cell and/or one or more candidate cells (also referred to as neighbor cells) according to the measurement configuration.

In some embodiments, the terminal device may perform a trigger condition decision based on a first condition. For example, the terminal device may perform the trigger condition decision based on RRM measurement information and a first position offset. Relevant content regarding the first condition may be referred to in the previous descriptions.

In some embodiments, the terminal device may measure the serving cell and/or one or more candidate cells to perform the trigger condition decision. For example, the terminal device measures the RRM measurement information and the first position offset of the serving cell, as well as the RRM measurement information and the first position offset of one or more candidate cells to perform the trigger condition decision.

In some embodiments, after performing the first measurement, the terminal device sends/reports the measurement result to a serving satellite.

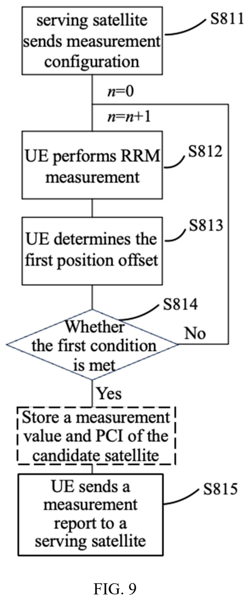

The embodiments of the present disclosure do not limit the specific implementation of operation S810. The following describes the implementation of operation S810 in conjunction with FIG. 9, which is not repeated here.

At operation S820, the serving satellite sends a conditional handover request to a candidate satellite and receives a conditional handover request acknowledgment signaling sent by the candidate satellite.

In some embodiments, operation S820 may include operations S820a and S820b. At operation S820a, the serving satellite sends a conditional handover request to the candidate satellite. At operation S820b, the serving satellite receives the conditional handover request acknowledgment signaling sent by the candidate satellite.

In some embodiments, the conditional handover request acknowledgment signaling sent by the candidate satellite to the serving satellite may carry a resource allocated by the candidate satellite to the terminal device.

In some embodiments, the conditional handover request acknowledgment signaling sent by the candidate satellite to the serving satellite may carry system information such as an available spectrum resource and a service time threshold of the candidate satellite.

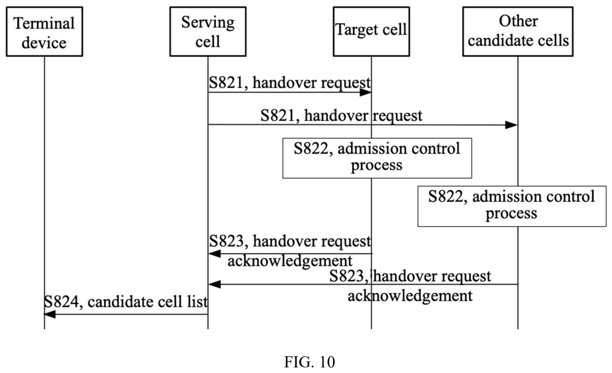

The embodiments of the present disclosure do not limit the specific implementation of operation S820. The following describes the implementation of operation S820 in conjunction with FIG. 10, which is not repeated here.

At operation S830, the terminal device determines a priority order of one or more candidate cells based on RRC reconfiguration information sent by the serving cell.

In some embodiments, when performing RRC reconfiguration for the terminal device, the serving cell may further send the resource allocated to the terminal device by one or more candidate satellites to the terminal device.

In some embodiments, the terminal device may determine the priority order of the candidate cell based on second RRM measurement information, the available spectrum resource information of the candidate cell, and the service time threshold of the candidate cell.

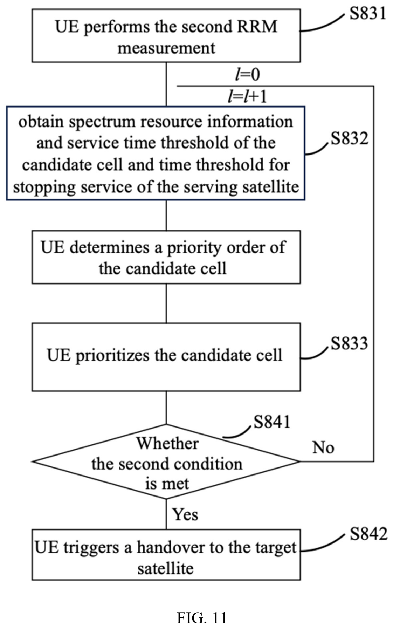

The following describes the specific implementation of operation S830 in conjunction with FIG. 11, which is not repeated here.

At operation S840, the terminal device performs a conditional handover execution event evaluation and performs a second condition decision on one or more candidate satellites based on the priority order. When the second condition is met, the terminal device triggers the handover to the target satellite.

The specific implementation of operation S840 may be referred to the relevant introduction in FIG. 11 below, which is not repeated here.

At operation S850, the terminal device performs a random access procedure based on the RRC reconfiguration information to access a target satellite.

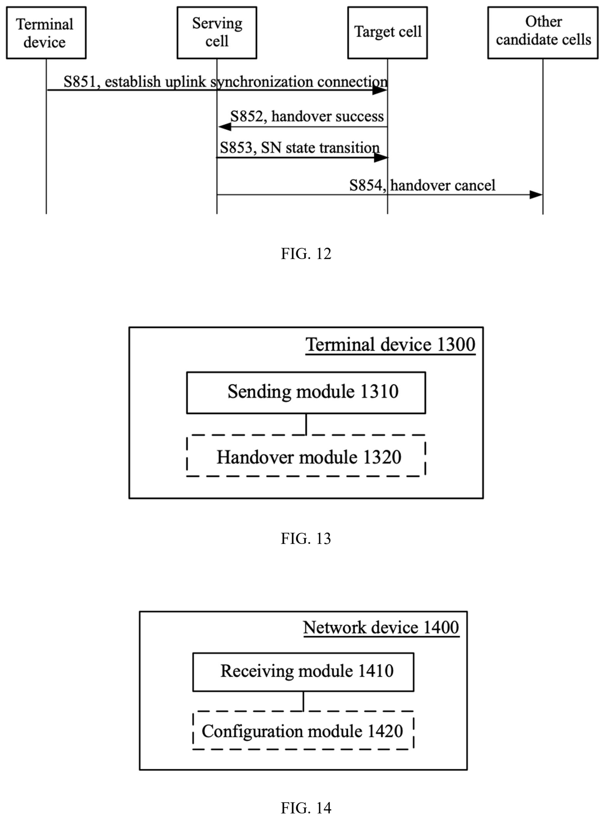

The specific implementation of operation S850 may be referred to the relevant introduction in FIG. 12 below, which is not repeated here.

The following provides exemplary introductions to specific implementations of operations S810 to S850 in conjunction with FIG. 9 to FIG. 12.

As an implementation, referring to FIG. 9, operation S810 may include operations S811 to S815.

At operations S811 to S812, the terminal device receives the measurement configuration sent by the serving satellite and performs the RRM measurement within the time indicated by the measurement configuration.

In some embodiments, the serving satellite may send the measurement configuration to the terminal device via reporting configuration (*ReportConfig*) signaling.

In some embodiments, the RRM measurement performed by the terminal device within the time indicated by the measurement configuration may be referred to as the first measurement.

In some embodiments, the RRM measurement is performed by the terminal device within the time indicated by the measurement configuration to obtain measurement results of the serving cell and/or one or more candidate cells, e.g., to obtain one or more of RSRP, RSRQ, and RS-SINR.

At operation S813, the terminal device determines a first position offset.

In some embodiments, the first position offset may be used to indicate a dynamic position offset between the terminal device and the cell.

In some embodiments, the terminal device may determine the first position offset based on its own positioning information and reference position information of the cell. For example, the terminal device may determine the first position offset based on its own positioning information, the reference position information of the serving cell, and the reference position information of the candidate cell.

At operation S814, the terminal device performs a trigger condition decision based on the first condition.

In some embodiments, the first condition is associated with the RRM measurement information and the first position offset, meaning that the terminal device may perform the trigger condition decision based on the RRM measurement information and the first position offset.

In some embodiments, a trigger event corresponding to the first condition may be referred to as a condEventA3' event.

At operation S815, the terminal device generates a measurement report based on the first condition and sends the measurement report to the serving satellite.

In some embodiments, the terminal device generating the measurement report based on the first condition may include the terminal device generating the measurement report according to a candidate satellite that meets the first condition, where the first condition includes a measurement result of the candidate satellite that meets the first condition.

In some embodiments, the terminal device may generate the measurement result of the candidate satellite or the measurement result of the neighbor cell (*measResulNeighCells*) according to a physical cell identifier (P*hysCellId*) of the candidate cell that meets the first condition.

In some embodiments, the terminal device may send the measurement report to the serving satellite via *Meas.Report* signaling.

In some embodiments, after sending the measurement report, the terminal device may further store the RRM measurement value of the one or more candidate cells and the corresponding physical cell identifier (PCI).

As an implementation, referring to FIG. 10, operation S820 may include operations S821 to S824.

At operation S821, the serving satellite sends conditional handover request (*CHORequest*) signaling to one or more candidate satellites.

At operation S822, after receiving the conditional handover request signaling, the candidate satellite enters an admission control process.

In some embodiments, after entering the admission control process, the candidate satellite may determine whether the terminal device meets admission control criteria.

In some embodiments, if the terminal device meets the admission control criteria, the candidate satellite allocates a new cell-radio network temporary identifier (C-RNTI) to the terminal device for this handover.

At operation S823, the candidate satellite sends conditional handover request acknowledgment (*CHORequestACK*) signaling to the serving satellite.

In some embodiments, the conditional handover request acknowledgment signaling may carry the resource allocated by the candidate satellite to the terminal device.

In some embodiments, the conditional handover request acknowledgment signaling may further carry system information such as the available spectrum resource of the candidate satellite and the service time threshold of the candidate satellite.

At operation S824, the serving satellite integrates received conditional handover candidate cell list (*choCandidateCellList*) information and sends it to the terminal device.

As an implementation, referring to FIG. 11, FIG. 11 illustrates one implementation of operations S830 and S840. Operation S830 may include operations S831 to S833, and operation S840 may include operations S841 and S842.

At operation S831, the terminal device performs a second RRM measurement based on the configured re-measurement time to obtain a latest measurement result.

In some embodiments, the terminal device may perform the second RRM measurement to obtain latest RSRP and RS-SINR values of the candidate cell.

At operation S832, after receiving the RRC reconfiguration signaling sent by the serving satellite, the terminal device obtains the spectrum resource information and service time threshold of the candidate cell and a time threshold for stopping service of the serving satellite.

At operation S833, the terminal device prioritizes candidate cells based on the second RRM measurement information, and the available spectrum resource information and the service time threshold information of the candidate cells.

In some embodiments, after prioritizing the candidate cells, the terminal device may generate a conditional handover candidate cell list (*choCandidateCellList'*) ordered by priority.

At operation S841, the terminal device performs a second condition decision sequentially according to the priority order of the candidate cells.

In some embodiments, the terminal device may perform the second condition decision sequentially based on the reordered conditional handover candidate cell list (*choCandidateCellList'*).

In some embodiments, the second condition may be associated with a plurality of triggers, e.g., the second condition is a condition based on the RRM measurement and the first position offset. Detailed descriptions of the second condition may be referred to in the previous descriptions and are not repeated here.

At operation S842, when a certain target satellite meets the second condition, the terminal device triggers a handover to the target satellite.

In some embodiments, the process of the second condition decision refers to the terminal device performing a handover execution event evaluation for a certain candidate satellite to determine whether the candidate satellite meets a handover execution condition or handover trigger condition corresponding to the execution event. If met, the candidate satellite is selected as the target satellite, and the process of the handover to the target satellite is executed; and if not met, a next candidate cell in the conditional handover candidate cell list ordered by priority is selected for a next handover execution event evaluation.

As an implementation, referring to FIG. 12, operation S850 may include operations S851 to S854.

At operation S851, the terminal device establishes an uplink synchronization connection with the target satellite through a random access procedure.

At operation S852, after the target satellite confirms the establishment of the connection with the terminal device, the target satellite sends handover success (*HandoverSuccess*) signaling to the serving satellite.

At operation S853, the serving satellite sends serving node (SN) state transition signaling to the target satellite, followed by a context release of the terminal device.

At operation S854, the serving satellite sends handover cancel (*HandoverCancel*) signaling to other candidate satellites to release resources allocated to the terminal device.

The above have detailed the method embodiments of the present disclosure in conjunction with FIG. 1 to FIG. 12. The following describes apparatus embodiments of the present disclosure in detail in conjunction with FIG. 13 to FIG. 16. It should be understood that the description of the method embodiments corresponds to the description of the FIG. embodiments, so the parts not detailed may be referred to in the previous method embodiments.

FIG. 13 is a schematic structural diagram of a terminal device according to an embodiment of the present disclosure. The terminal device 1300 shown in FIG. 13 may include a sending module 1310.

The sending module 1310 may be configured to send a measurement report, where the sending of the measurement report is triggered based on a first condition, and the first condition is associated with a plurality of triggers.

Optionally, the plurality of triggers include a measurement-based trigger and a location-based trigger.

Optionally, the first condition is associated with a first position offset, the first position offset is used to indicate a position offset between the terminal device and a serving cell and/or a position offset between the terminal device and a first candidate cell, and the first candidate cell is one of one or more candidate cells configured for the terminal device by the serving cell.

Optionally, the first condition is associated with one or more of: a measurement result of the serving cell; a measurement result of the first candidate cell; and a hysteresis parameter of a trigger event corresponding to the first condition.

Optionally, the first position offset is dynamically changed.

Optionally, the first position offset is associated with one or more of: the position offset between the terminal device and the serving cell; the position offset between the terminal device and the first candidate cell; an empirical coefficient of a cell position offset; and an offset factor corresponding to the first candidate cell.

Optionally, the first position offset is indicated by a position offset between the terminal device and a reference position of the serving cell and/or a position offset between the terminal device and a reference position of the first candidate cell.

Optionally, the terminal device further includes a handover module 1320, configured to execute a handover from a serving cell to a target cell, where the handover is triggered based on a second condition, and the second condition is associated with the plurality of triggers.

Optionally, the target cell is one of one or more candidate cells corresponding to the terminal device, and the target cell is determined by the terminal device according to a priority order of the one or more candidate cells.

Optionally, the priority order of the one or more candidate cells is determined according to first information, and the first information includes one or more of: an available spectrum resource of the one or more candidate cells; a service time of the one or more candidate cells for the terminal device; a service time of the serving cell for the terminal device; and a measurement result of the one or more candidate cells.

Optionally, part or all of the first information is carried in a reconfiguration message sent by the serving cell.

Optionally, a second candidate cell is any one of the one or more candidate cells, a priority order of the second candidate cell is determined according to a first target value corresponding to the second candidate cell, and the first target value is determined based on:

$$F_u^l = \alpha \times \frac{T_u^l}{T_{\max}} + \mu \times \frac{10^{\frac{S_u^l}{10}}}{10^{\frac{S_{\max}}{10}}} + \gamma \times \frac{R_u^l}{R_{\max}}$$

where $F_u^l$ represents the first target value corresponding to the second candidate cell, $T_u^l$ represents a time when the second candidate cell covers the terminal device, $T_{max}$ represents a longest time when the terminal device is covered by a single cell, $S_u^l$ represents a signal-to-interference plus noise ratio between the second candidate cell and the terminal device, $S_{max}$ represents a maximum value of a signal-to-interference plus noise ratio between the single cell and the terminal device, $R_u^l$ represents an available service link rate between the second candidate cell and the terminal device, $R_{max}$ represents a maximum service link rate between the single cell and the terminal device, and $\alpha$, $\mu$, and $\gamma$ represent weights of a cell service time, a signal-to-interference plus noise ratio, and a service link rate, respectively.

Optionally, the available service link rate between the second candidate cell and the terminal device is determined according to one or more of: an available spectrum resource allocated by the second candidate cell to the terminal device; a spectrum efficiency of the terminal device; whether a service link exists between the second candidate cell and the terminal device; and an available service capacity of the second candidate cell.

Optionally, the terminal device further includes a measurement module 1420, configured to perform a measurement according to a re-measurement time that is configured, where the re-measurement time is configured according to one or both of: a time when the terminal device periodically sends the measurement report; and a time when the terminal device receives a reconfiguration message sent by the serving cell, where the reconfiguration message includes access resource information configured by the target cell for the terminal device.

Optionally, the re-measurement time is a smaller value of the time when the terminal device periodically sends the measurement report and the time when the terminal device receives the reconfiguration message.

Optionally, the terminal device accesses a non-terrestrial communication network (NTN).

FIG. 14 is a schematic structural diagram of a network device according to an embodiment of the present disclosure. The network device 1400 shown in FIG. 14 may be a network device to which a serving cell belongs. The network device 1400 may include a receiving module 1410.

The receiving module 1410 may be configured to receive a measurement report sent by a terminal device, where the sending of the measurement report is triggered based on a first condition, and the first condition is associated with a plurality of triggers.

Optionally, the plurality of triggers include a measurement-based trigger and a location-based trigger.

Optionally, the first condition is associated with a first position offset, the first position offset is used to indicate a position offset between the terminal device and the serving cell and/or a position offset between the terminal device and a first candidate cell, and the first candidate cell is one of one or more candidate cells configured for the terminal device by the serving cell.

Optionally, the first condition is associated with one or more of: a measurement result of the serving cell; a measurement result of the first candidate cell; and a hysteresis parameter of a trigger event corresponding to the first condition.

Optionally, the first position offset is dynamically changed.

Optionally, the first position offset is associated with one or more of: the position offset between the terminal device and the serving cell; the position offset between the terminal device and the first candidate cell; an empirical coefficient of a cell position offset; and an offset factor corresponding to the first candidate cell.

Optionally, the first position offset is indicated by a position offset between the terminal device and a reference position of the serving cell and/or a position offset between the terminal device and a reference position of the first candidate cell.

Optionally, a handover of the terminal device from the serving cell to a target cell is triggered based on a second condition, and the second condition is associated with the plurality of triggers.

Optionally, the target cell is one of one or more candidate cells corresponding to the terminal device, and the target cell is determined by the terminal device according to a priority order of the one or more candidate cells.

Optionally, the priority order of the one or more candidate cells is determined according to first information, and the first information includes one or more of: an available spectrum resource of the one or more candidate cells; a service time of the one or more candidate cells for the terminal device; a service time of the serving cell for the terminal device; and a measurement result of the one or more candidate cells.

Optionally, part or all of the first information is carried in a reconfiguration message sent by the serving cell.

Optionally, a second candidate cell is any one of the one or more candidate cells, a priority order of the second candidate cell is determined according to a first target value corresponding to the second candidate cell, and the first target value is determined based on:

$$F_u^l = \alpha \times \frac{T_u^l}{T_{\max}} + \mu \times \frac{10^{\frac{S_u^l}{10}}}{10^{\frac{S_{\max}}{10}}} + \gamma \times \frac{R_u^l}{R_{\max}}$$

where $F_u^l$ represents the first target value corresponding to the second candidate cell, $T_u^l$ represents a time when the second candidate cell covers the terminal device, $T_{\max}$ represents a longest time when the terminal device is covered by a single cell, $S_u^l$ represents a signal-to-interference plus noise ratio between the second candidate cell and the terminal device, $S_{\max}$ represents a maximum value of a signal-to-interference plus noise ratio between the single cell and the terminal device, $R_u^l$ represents an available service link rate between the second candidate cell and the terminal device, $R_{\max}$ represents a maximum service link rate between the single cell and the terminal device, and $\alpha, \mu,$ and $\gamma$ represent weights of a cell service time, a signal-to-interference plus noise ratio, and a service link rate, respectively.

Optionally, the available service link rate between the second candidate cell and the terminal device is determined according to one or more of: an available spectrum resource allocated by the second candidate cell to the terminal device; a spectrum efficiency of the terminal device; whether a service link exists between the second candidate cell and the terminal device; and an available service capacity of the second candidate cell.

Optionally, the network device further includes a configuration module 1420, configured to configure a re-measurement time for the terminal device, where the re-measurement time is used for the terminal device to perform measurement, and the re-measurement time is configured according to one or both of: a time when the terminal device periodically sends the measurement report; and a time when the terminal device receives a reconfiguration message sent by the serving cell, where the reconfiguration message includes access resource information configured by the target cell for the terminal device.

Optionally, the re-measurement time is a smaller value of the time when the terminal device periodically sends the measurement report and the time when the terminal device receives the reconfiguration message.

Optionally, the terminal device accesses a non-terrestrial communication network (NTN).

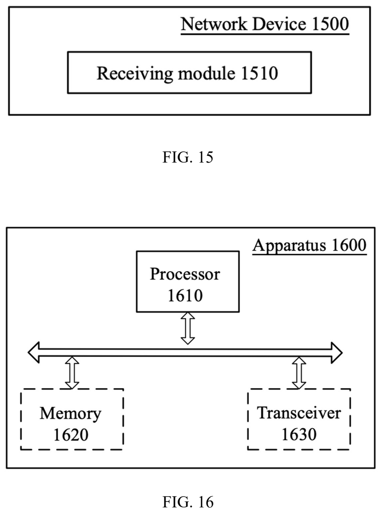

FIG. 15 is another schematic structural diagram of a network device according to an embodiment of the present disclosure. The network device 1500 shown in FIG. 15 may be a network device to which a target cell belongs. The network device 1500 may include a receiving module 1510.

The receiving module 1510 may be configured to receive an access request sent by a terminal device, where the access request is used to request a handover of the terminal device from a serving cell to the target cell, the handover is triggered based on a second condition, and the second condition is associated with a plurality of triggers.

Optionally, the plurality of triggers include a measurement-based trigger and a location-based trigger.

Optionally, the second condition is associated with a first position offset, the first position offset is used to indicate a position offset between the terminal device and the serving cell and/or a position offset between the terminal device and a first candidate cell, and the first candidate cell is one of one or more candidate cells configured for the terminal device by the serving cell.

Optionally, the second condition is associated with one or more of: a measurement result of the serving cell; a measurement result of the first candidate cell; and a hysteresis parameter of a trigger event corresponding to the first condition.

Optionally, the first position offset is dynamically changed.

Optionally, the first position offset is associated with one or more of: the position offset between the terminal device and the serving cell; the position offset between the terminal device and the first candidate cell; an empirical coefficient of a cell position offset; and an offset factor corresponding to the first candidate cell.

Optionally, the first position offset is indicated by a position offset between the terminal device and a reference position of the serving cell and/or a position offset between the terminal device and a reference position of the first candidate cell.

Optionally, the target cell is one of one or more candidate cells corresponding to the terminal device, and the target cell is determined by the terminal device according to a priority order of the one or more candidate cells.

Optionally, the priority order of the one or more candidate cells is determined according to first information, and the first information includes one or more of: an available spectrum resource of the one or more candidate cells; a service time of the one or more candidate cells for the terminal device; a service time of the serving cell for the terminal device; and a measurement result of the one or more candidate cells.

Optionally, part or all of the first information is carried in a reconfiguration message sent by the serving cell.

Optionally, a second candidate cell is any one of the one or more candidate cells, a priority order of the second candidate cell is determined according to a first target value corresponding to the second candidate cell, and the first target value is determined based on:

$$F_u^l = \alpha \times \frac{T_u^l}{T_{\max}} + \mu \times \frac{10^{\frac{S_u^l}{10}}}{10^{\frac{S_{\max}}{10}}} + \gamma \times \frac{R_u^l}{R_{\max}}$$

where $F_u^l$ represents the first target value corresponding to the second candidate cell, $T_u^l$ represents a time when the second candidate cell covers the terminal device, $T_{\max}$ represents a longest time when the terminal device is covered by a single cell, $S_u^l$ represents a signal-to-interference plus noise ratio between the second candidate cell and the terminal device, $S_{\max}$ represents a maximum value of a signal-to-interference plus noise ratio between the single cell and the terminal device, $R_u^l$ represents an available service link rate between the second candidate cell and the terminal device, $R_{\max}$ represents a maximum service link rate between the single cell and the terminal device, and $\alpha$, $\mu$, and $\gamma$ represent weights of a cell service time, a signal-to-interference plus noise ratio, and a service link rate, respectively.

Optionally, the available service link rate between the second candidate cell and the terminal device is determined according to one or more of: an available spectrum resource allocated by the second candidate cell to the terminal device; a spectrum efficiency of the terminal device; whether a service link exists between the second candidate cell and the terminal device; and an available service capacity of the second candidate cell.

FIG. 16 is a schematic structural diagram of an apparatus for communication according to an embodiment of the present disclosure. The dashed line in FIG. 16 indicates that the unit or module is optional. The apparatus 1600 may be configured to implement the method described in the foregoing method embodiments. The apparatus 1600 may be a chip, a terminal device, or a network device.

The apparatus 1600 may include one or more processors 1610, and the processor 1610 may support the apparatus 1600 to implement the method described in the foregoing method embodiments. The processor 1610 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 1600 may further include one or more memories 1620 storing a program, and the program may be executed by the processor 1610 to cause the processor 1610 to perform the method described in the foregoing method embodiments. The memory 1620 may be independent of the processor 1610 or may be integrated into the processor 1610.

The apparatus 1600 may further include a transceiver 1630, and the processor 1610 may communicate with another device or chip via the transceiver 1630. For example, the processor 1610 may perform data transceiving with another device or chip via the transceiver 1630.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that the terms "system" and "network" in the present disclosure may be used interchangeably. In addition, the terms used in the present disclosure are merely used to explain specific embodiments of the present disclosure and are not intended to limit the present disclosure. In the description, claims, and accompanying drawings of the present disclosure, the terms "first", "second", "third", "fourth", and the like are used to distinguish different objects rather than describe a specific order. In addition, the terms "including" and "having" and any variations thereof are intended to cover non-exclusive inclusion.

The term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present disclosure, "B corresponding to A" means that B is associated with A and B may be determined by A. However, it should also be understood that determining B based on A does not mean determining B only based on A, but that B may also be determined based on A and/or other information.

In the embodiments of the present disclosure, the term "corresponding" may indicate that there is a direct correspondence or indirect correspondence between the two, or may indicate that there is an association relationship between the two, or may be relationships such as indicating and being indicated, configuring, and being configured, etc.

In the embodiments of the present disclosure, the term "including" may indicate both direct inclusion and indirect inclusion. Alternatively, the term "including" in the embodiments of the present disclosure may be replaced with "indicating" or "used to determine." For example, "A including B" may be replaced with "A indicating B" or "A used to determine B."

In the embodiments of the present disclosure, the terms "predefined" or "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

In the embodiments of the present disclosure, the term "protocol" in the embodiments of the present disclosure may refer to a standard protocol in the field of communications, such as an LTE protocol, an NR protocol, and related protocols applied to a future communication system, which is not limited in the present disclosure.

In the embodiments of the present disclosure, the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In various embodiments of the present disclosure, a size of a serial number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

**Claims**

**1.** A method for wireless communication, comprising:

sending, by a terminal device, a measurement report, wherein the sending of the measurement report is triggered based on a first condition, and the first condition is associated with a plurality of triggers. wherein the plurality of triggers include a measurement-based trigger and a location-based trigger.
wherein the first condition is associated with a first position offset, the first position offset indicate at least a position offset between the terminal device and a serving cell and a position offset between the terminal device and a first candidate cell, and the first candidate cell is one of one or more candidate cells configured for the terminal device by the serving cell.

**2.** The method according to claim 3, wherein the first condition is associated with one or more of:

a measurement result of the serving cell;
a measurement result of the first candidate cell; and
a hysteresis parameter of a trigger event corresponding to the first condition.

**5.** The method according to claim 3 or claim 4, wherein the first position offset is dynamically changed.

**6.** The method according to any one of claims 3 to 5, wherein the first position offset is associated with one or more of:

the position offset between the terminal device and the serving cell;
the position offset between the terminal device and the first candidate cell;
an empirical coefficient of a cell position offset; and
an offset factor corresponding to the first candidate cell.

**7.** The method according to any one of claims 3 to 6, wherein the first position offset is indicated by one or both of a position offset between the terminal device and a reference position of the serving cell and a position offset between the terminal device and a reference position of the first candidate cell.

**8.** The method according to any one of claims 1 to 7, further comprising:
executing, by the terminal device, a handover from a serving cell to a target cell, wherein the handover is triggered based on a second condition, and the second condition is associated with the plurality of triggers.

**9.** The method according to claim 8, wherein the target cell is one of one or more candidate cells corresponding to the terminal device, and the target cell is determined by the terminal device according to a priority order of the one or more candidate cells.

**10.** The method according to claim 9, wherein the priority order of the one or more candidate cells is determined according to first information, and the first information includes one or more of:

an available spectrum resource of the one or more candidate cells;
a service time of the one or more candidate cells for the terminal device;
a service time of the serving cell for the terminal device; and
a measurement result of the one or more candidate cells.

**11.** The method according to claim 10, wherein part or all of the first information is carried in a reconfiguration message sent by the serving cell.

**12.** The method according to any one of claims 9 to 11, wherein a second candidate cell is any one of the one or more candidate cells, a priority order of the second candidate cell is determined according to a first target value corresponding to the second candidate cell, and the first target value is determined based on:

$$F_u^l = \alpha \times \frac{T_u^l}{T_{\max}} + \mu \times \frac{10^{\frac{S_u^l}{10}}}{10^{\frac{S_{\max}}{10}}} + \gamma \times \frac{R_u^l}{R_{\max}}$$

wherein $F_u^l$ represents the first target value corresponding to the second candidate cell, $T_u^l$ represents a time when the second candidate cell covers the terminal device, $T_{max}$ represents a longest time when the terminal device is covered by a single cell, $S_u^l$ represents a signal-to-interference plus noise ratio between the second candidate cell and the terminal device, $S_{max}$ represents a maximum value of a signal-to-interference plus noise ratio between the single cell and the terminal device, $R_u^l$ represents an available service link rate between the second candidate cell and the terminal device, $R_{max}$ represents a maximum service link rate between the single cell and the terminal device, and $\alpha$, $\mu$, and $\gamma$ represent weights of a cell service time, a signal-to-interference plus noise ratio, and a service link rate, respectively.

**13.** The method according to claim 12, wherein the available service link rate between the second candidate cell and the terminal device is determined according to one or more of:

an available spectrum resource allocated by the second candidate cell to the terminal device;
a spectrum efficiency of the terminal device;
whether a service link exists between the second candidate cell and the terminal device; and
an available service capacity of the second candidate cell.

**14.** The method according to any one of claims 8 to 13, wherein before executing, by the terminal device, the handover from the serving cell to the target cell, the method further includes:
performing, by the terminal device, a measurement according to a re-measurement time that is configured, wherein the re-measurement time is configured according to one or both of:

a time when the terminal device periodically sends the measurement report; and
a time when the terminal device receives a reconfiguration message sent by the serving cell, wherein the reconfiguration message includes access resource information configured by the target cell for the terminal device.

**15.** The method according to claim 14, wherein the re-measurement time is a smaller value of the time when the terminal device periodically sends the measurement report and the time when the terminal device receives the reconfiguration message.

**16.** The method according to any one of claims 1 to 15, wherein the terminal device accesses a non-terrestrial communication network, NTN.

**17.** A method for wireless communication, comprising:
receiving, by a serving cell, a measurement report sent by a terminal device, wherein the sending of the measurement report is triggered based on a first condition, and the first condition is associated with a plurality of triggers.

**18.** The method according to claim 17, wherein the plurality of triggers include a measurement-based trigger and a location-based trigger.

**19.** The method according to claim 17 or claim 18, wherein the first condition is associated with a first position offset, the first position offset is used to indicate one or both of a position offset between the terminal device and a serving cell and a position offset between the terminal device and a first candidate cell, and the first candidate cell is one of one or more candidate cells configured for the terminal device by the serving cell.

**20.** The method according to claim 19, wherein the first condition is associated with one or more of:

a measurement result of the serving cell;
a measurement result of the first candidate cell; and
a hysteresis parameter of a trigger event corresponding to the first condition.

**21.** The method according to claim 19 or claim 20, wherein the first position offset is dynamically changed.

**22.** The method according to any one of claims 19 to 21, wherein the first position offset is associated with one or more of:

the position offset between the terminal device and the serving cell;
the position offset between the terminal device and the first candidate cell;
an empirical coefficient of a cell position offset; and
an offset factor corresponding to the first candidate cell.

23. The method according to any one of claims 19 to 22, wherein the first position offset is indicated by one or both of a position offset between the terminal device and a reference position of the serving cell and a position offset between the terminal device and a reference position of the first candidate cell.

24. The method according to any one of claims 17 to 23, wherein a handover of the terminal device from the serving cell to a target cell is triggered based on a second condition, and the second condition is associated with the plurality of triggers.

25. The method according to claim 24, wherein the target cell is one of one or more candidate cells corresponding to the terminal device, and the target cell is determined by the terminal device according to a priority order of the one or more candidate cells.

26. The method according to claim 25, wherein the priority order of the one or more candidate cells is determined according to first information, and the first information includes one or more of:

an available spectrum resource of the one or more candidate cells;
a service time of the one or more candidate cells for the terminal device;
a service time of the serving cell for the terminal device; and
a measurement result of the one or more candidate cells.

27. The method according to claim 26, wherein part or all of the first information is carried in a reconfiguration message sent by the serving cell.

28. The method according to any one of claims 25 to 27, wherein a second candidate cell is any one of the one or more candidate cells, a priority order of the second candidate cell is determined according to a first target value corresponding to the second candidate cell, and the first target value is determined based on:

$$F_u^l = \alpha \times \frac{T_u^l}{T_{\max}} + \mu \times \frac{10^{\frac{S_u^i}{10}}}{10^{\frac{S_{\max}}{10}}} + \gamma \times \frac{R_u^l}{R_{\max}}$$

wherein $F_u^l$ represents the first target value corresponding to the second candidate cell, $T_u^l$ represents a time when the second candidate cell covers the terminal device, $T_{\max}$ represents a longest time when the terminal device is covered by a single cell, $S_u^l$ represents a signal-to-interference plus noise ratio between the second candidate cell and the terminal device, $S_{\max}$ represents a maximum value of a signal-to-interference plus noise ratio between the single cell and the terminal device, $R_u^l$ represents an available service link rate between the second candidate cell and the terminal device, $R_{\max}$ represents a maximum service link rate between the single cell and the terminal device, and $\alpha$, $\mu$, and $\gamma$ represent weights of a cell service time, a signal-to-interference plus noise ratio, and a service link rate, respectively.

29. The method according to claim 28, wherein the available service link rate between the second candidate cell and the terminal device is determined according to one or more of:

an available spectrum resource allocated by the second candidate cell to the terminal device;
a spectrum efficiency of the terminal device;
whether a service link exists between the second candidate cell and the terminal device; and
an available service capacity of the second candidate cell.

30. The method according to any one of claims 24 to 29, further comprising:
configuring, by the serving cell, a re-measurement time for the terminal device, wherein the re-measurement time is used for the terminal device to perform measurement, and the re-measurement time is configured according to one or both of:

a time when the terminal device periodically sends the measurement report; and
a time when the terminal device receives a reconfiguration message sent by the serving cell, wherein the reconfiguration message includes access resource information configured by the target cell for the terminal device.

**31.** The method according to claim 30, wherein the re-measurement time is a smaller value of the time when the terminal device periodically sends the measurement report and the time when the terminal device receives the reconfiguration message.

**32.** The method according to any one of claims 17 to 31, wherein the terminal device is accesses a non-terrestrial communication network, NTN.

**33.** A method for wireless communication, comprising:
receiving, by a target cell, an access request sent by a terminal device, wherein the access request is used to request a handover of the terminal device from a serving cell to the target cell, the handover is triggered based on a second condition, and the second condition is associated with a plurality of triggers.

**34.** The method according to claim 33, wherein the plurality of triggers include a measurement-based trigger and a location-based trigger.

**35.** The method according to claim 33 or claim 34, wherein the second condition is associated with a first position offset, the first position offset is used to indicate one or both of a position offset between the terminal device and the serving cell and a position offset between the terminal device and a first candidate cell, and the first candidate cell is one of one or more candidate cells configured for the terminal device by the serving cell.

**36.** The method according to claim 35, wherein the second condition is associated with one or more of:

a measurement result of the serving cell;
a measurement result of the first candidate cell; and
a hysteresis parameter of a trigger event corresponding to the first condition.

**37.** The method according to claim 35 or claim 36, wherein the first position offset is dynamically changed.

**38.** The method according to any one of claims 35 to 37, wherein the first position offset is associated with one or more of:

the position offset between the terminal device and the serving cell;
the position offset between the terminal device and the first candidate cell;
an empirical coefficient of a cell position offset; and
an offset factor corresponding to the first candidate cell.

**39.** The method according to any one of claims 35 to 38, wherein the first position offset is indicated by one or both of a position offset between the terminal device and a reference position of the serving cell and a position offset between the terminal device and a reference position of the first candidate cell.

**40.** The method according to any one of claims 33 to 39, wherein the target cell is one of one or more candidate cells corresponding to the terminal device, and the target cell is determined by the terminal device according to a priority order of the one or more candidate cells.

**41.** The method according to claim 40, wherein the priority order of the one or more candidate cells is determined according to first information, and the first information includes one or more of:

an available spectrum resource of the one or more candidate cells;
a service time of the one or more candidate cells for the terminal device;
a service time of the serving cell for the terminal device; and

a measurement result of the one or more candidate cells.

**42.** The method according to claim 41, wherein part or all of the first information is carried in a reconfiguration message sent by the serving cell.

**43.** The method according to any one of claims 40 to 42, wherein a second candidate cell is any one of the one or more candidate cells, a priority order of the second candidate cell is determined according to a first target value corresponding to the second candidate cell, and the first target value is determined based on:

$$F_u^l = \alpha \times \frac{T_u^l}{T_{\max}} + \mu \times \frac{10^{\frac{S_u^l}{10}}}{10^{\frac{S_{\max}}{10}}} + \gamma \times \frac{R_u^l}{R_{\max}}$$

wherein $F_u^l$ represents the first target value corresponding to the second candidate cell, $T_u^l$ represents a time when the second candidate cell covers the terminal device, $T_{\max}$ represents a longest time when the terminal device is covered by a single cell, $S_u^l$ represents a signal-to-interference plus noise ratio between the second candidate cell and the terminal device, $S_{\max}$ represents a maximum value of a signal-to-interference plus noise ratio between the single cell and the terminal device, $R_u^l$ represents an available service link rate between the second candidate cell and the terminal device, $R_{\max}$ represents a maximum service link rate between the single cell and the terminal device, and $\alpha$, $\mu$, and $\gamma$ represent weights of a cell service time, a signal-to-interference plus noise ratio, and a service link rate, respectively.

**44.** The method according to claim 43, wherein the available service link rate between the second candidate cell and the terminal device is determined according to one or more of:

an available spectrum resource allocated by the second candidate cell to the terminal device;
a spectrum efficiency of the terminal device;
whether a service link exists between the second candidate cell and the terminal device; and
an available service capacity of the second candidate cell.

**45.** A terminal device, comprising:
a sending module, configured to send a measurement report, wherein the sending of the measurement report is triggered based on a first condition, and the first condition is associated with a plurality of triggers.

**46.** The terminal device according to claim 45, wherein the plurality of triggers include a measurement-based trigger and a location-based trigger.

**47.** The terminal device according to claim 45 or claim 46, wherein the first condition is associated with a first position offset, the first position offset is used to indicate one or both of a position offset between the terminal device and a serving cell and a position offset between the terminal device and a first candidate cell, and the first candidate cell is one of one or more candidate cells configured for the terminal device by the serving cell.

**48.** The terminal device according to claim 47, wherein the first condition is associated with one or more of:

a measurement result of the serving cell;
a measurement result of the first candidate cell; and
a hysteresis parameter of a trigger event corresponding to the first condition.

**49.** The terminal device according to claim 47 or claim 48, wherein the first position offset is dynamically changed.

**50.** The terminal device according to any one of claims 47 to 49, wherein the first position offset is associated with one or more of:

the position offset between the terminal device and the serving cell;

the position offset between the terminal device and the first candidate cell;
an empirical coefficient of a cell position offset; and
an offset factor corresponding to the first candidate cell.

51. The terminal device according to any one of claims 47 to 50, wherein the first position offset is indicated by one or both of a position offset between the terminal device and a reference position of the serving cell and a position offset between the terminal device and a reference position of the first candidate cell.

52. The terminal device according to any one of claims 45 to 51, further comprising:
a handover module, configured to execute a handover from a serving cell to a target cell, wherein the handover is triggered based on a second condition, and the second condition is associated with the plurality of triggers.

53. The terminal device according to claim 52, wherein the target cell is one of one or more candidate cells corresponding to the terminal device, and the target cell is determined by the terminal device according to a priority order of the one or more candidate cells.

54. The terminal device according to claim 53, wherein the priority order of the one or more candidate cells is determined according to first information, and the first information includes one or more of:

an available spectrum resource of the one or more candidate cells;
a service time of the one or more candidate cells for the terminal device;
a service time of the serving cell for the terminal device; and
a measurement result of the one or more candidate cells.

55. The terminal device according to claim 54, wherein part or all of the first information is carried in a reconfiguration message sent by the serving cell.

56. The terminal device according to any one of claims 53 to 55, wherein a second candidate cell is any one of the one or more candidate cells, a priority order of the second candidate cell is determined according to a first target value corresponding to the second candidate cell, and the first target value is determined based on:

$$F_u^l = \alpha \times \frac{T_u^l}{T_{max}} + \mu \times \frac{10^{\frac{S_u^l}{10}}}{10^{\frac{S_{max}}{10}}} + \gamma \times \frac{R_u^l}{R_{max}}$$

wherein $F_u^l$ represents the first target value corresponding to the second candidate cell, $T_u^l$ represents a time when the second candidate cell covers the terminal device, $T_{max}$ represents a longest time when the terminal device is covered by a single cell, $S_u^l$ represents a signal-to-interference plus noise ratio between the second candidate cell and the terminal device, $S_{max}$ represents a maximum value of a signal-to-interference plus noise ratio between the single cell and the terminal device, $R_u^l$ represents an available service link rate between the second candidate cell and the terminal device, $R_{max}$ represents a maximum service link rate between the single cell and the terminal device, and $\alpha$, $\mu$, and $\gamma$ represent weights of a cell service time, a signal-to-interference plus noise ratio, and a service link rate, respectively.

57. The terminal device according to claim 56, wherein the available service link rate between the second candidate cell and the terminal device is determined according to one or more of:

an available spectrum resource allocated by the second candidate cell to the terminal device;
a spectrum efficiency of the terminal device;
whether a service link exists between the second candidate cell and the terminal device; and
an available service capacity of the second candidate cell.

58. The terminal device according to any one of claims 52 to 57, further comprising:
a measurement module, configured to perform a measurement according to a re-measurement time that is configured, wherein the re-measurement time is configured according to one or both of:

> a time when the terminal device periodically sends the measurement report; and
> a time when the terminal device receives a reconfiguration message sent by the serving cell, wherein the reconfiguration message includes access resource information configured by the target cell for the terminal device.

**59.** The terminal device according to claim 58, wherein the re-measurement time is a smaller value of the time when the terminal device periodically sends the measurement report and the time when the terminal device receives the reconfiguration message.

**60.** The terminal device according to any one of claims 45 to 59, wherein the terminal device accesses a non-terrestrial communication network, NTN.

**61.** A network device, wherein the network device is a network device to which a serving cell belongs, comprising: a receiving module, configured to receive a measurement report sent by a terminal device, wherein the sending of the measurement report is triggered based on a first condition, and the first condition is associated with a plurality of triggers.

**62.** The network device according to claim 61, wherein the plurality of triggers include a measurement-based trigger and a location-based trigger.

**63.** The network device according to claim 61 or claim 62, wherein the first condition is associated with a first position offset, the first position offset is used to indicate one or both of a position offset between the terminal device and the serving cell and a position offset between the terminal device and a first candidate cell, and the first candidate cell is one of one or more candidate cells configured for the terminal device by the serving cell.

**64.** The network device according to claim 63, wherein the first condition is associated with one or more of:

> a measurement result of the serving cell;
> a measurement result of the first candidate cell; and
> a hysteresis parameter of a trigger event corresponding to the first condition.

**65.** The network device according to claim 63 or claim 64, wherein the first position offset is dynamically changed.

**66.** The network device according to any one of claims 63 to 65, wherein the first position offset is associated with one or more of:

> the position offset between the terminal device and the serving cell;
> the position offset between the terminal device and the first candidate cell;
> an empirical coefficient of a cell position offset; and
> an offset factor corresponding to the first candidate cell.

**67.** The network device according to any one of claims 63 to 66, wherein the first position offset is indicated by one or both of a position offset between the terminal device and a reference position of the serving cell and a position offset between the terminal device and a reference position of the first candidate cell.

**68.** The network device according to any one of claims 61 to 67, wherein a handover of the terminal device from the serving cell to a target cell is triggered based on a second condition, and the second condition is associated with the plurality of triggers.

**69.** The network device according to claim 68, wherein the target cell is one of one or more candidate cells corresponding to the terminal device, and the target cell is determined by the terminal device according to a priority order of the one or more candidate cells.

**70.** The network device according to claim 69, wherein the priority order of the one or more candidate cells is determined according to first information, and the first information includes one or more of:

an available spectrum resource of the one or more candidate cells;
a service time of the one or more candidate cells for the terminal device;
a service time of the serving cell for the terminal device; and
a measurement result of the one or more candidate cells.

**71.** The network device according to claim 70, wherein part or all of the first information is carried in a reconfiguration message sent by the serving cell.

**72.** The network device according to any one of claims 69 to 71, wherein a second candidate cell is any one of the one or more candidate cells, a priority order of the second candidate cell is determined according to a first target value corresponding to the second candidate cell, and the first target value is determined based on:

$$F_u^l = \alpha \times \frac{T_u^l}{T_{max}} + \mu \times \frac{10^{\frac{S_u^l}{10}}}{10^{\frac{S_{max}}{10}}} + \gamma \times \frac{R_u^l}{R_{max}}$$

wherein $F_u^l$ represents the first target value corresponding to the second candidate cell, $T_u^l$ represents a time when the second candidate cell covers the terminal device, $T_{max}$ represents a longest time when the terminal device is covered by a single cell, $S_u^l$ represents a signal-to-interference plus noise ratio between the second candidate cell and the terminal device, $S_{max}$ represents a maximum value of a signal-to-interference plus noise ratio between the single cell and the terminal device, $R_u^l$ represents an available service link rate between the second candidate cell and the terminal device, $R_{max}$ represents a maximum service link rate between the single cell and the terminal device, and $\alpha$, $\mu$, and $\gamma$ represent weights of a cell service time, a signal-to-interference plus noise ratio, and a service link rate, respectively.

**73.** The network device according to claim 72, wherein the available service link rate between the second candidate cell and the terminal device is determined according to one or more of:

an available spectrum resource allocated by the second candidate cell to the terminal device;
a spectrum efficiency of the terminal device;
whether a service link exists between the second candidate cell and the terminal device; and
an available service capacity of the second candidate cell.

**74.** The network device according to any one of claims 68 to 73, further comprising:
a configuration module, configured to configure a re-measurement time for the terminal device, wherein the re-measurement time is used for the terminal device to perform measurement, and the re-measurement time is configured according to one or both of:

a time when the terminal device periodically sends the measurement report; and
a time when the terminal device receives a reconfiguration message sent by the serving cell, wherein the reconfiguration message includes access resource information configured by the target cell for the terminal device.

**75.** The network device according to claim 74, wherein the re-measurement time is a smaller value of the time when the terminal device periodically sends the measurement report and the time when the terminal device receives the reconfiguration message.

**76.** The network device according to any one of claims 61 to 75, wherein the terminal device accesses a non-terrestrial communication network, NTN.

**77.** A network device, wherein the network device is a network device to which a target cell belongs, comprising:
a receiving module, configured to receive an access request sent by a terminal device, wherein the access request is used to request a handover of the terminal device from a serving cell to the target cell, the handover is triggered based on a second condition, and the second condition is associated with a plurality of triggers.

**78.** The network device according to claim 77, wherein the plurality of triggers include a measurement-based trigger and a location-based trigger.

**79.** The network device according to claim 77 or claim 78, wherein the second condition is associated with a first position offset, the first position offset is used to indicate one or both of a position offset between the terminal device and the serving cell and a position offset between the terminal device and a first candidate cell, and the first candidate cell is one of one or more candidate cells configured for the terminal device by the serving cell.

**80.** The network device according to claim 79, wherein the second condition is associated with one or more of:

a measurement result of the serving cell;
a measurement result of the first candidate cell; and
a hysteresis parameter of a trigger event corresponding to the first condition.

**81.** The network device according to claim 79 or claim 80, wherein the first position offset is dynamically changed.

**82.** The network device according to any one of claims 79 to 81, wherein the first position offset is associated with one or more of:

the position offset between the terminal device and the serving cell;
the position offset between the terminal device and the first candidate cell;
an empirical coefficient of a cell position offset; and
an offset factor corresponding to the first candidate cell.

**83.** The network device according to any one of claims 79 to 82, wherein the first position offset is indicated by one or both of a position offset between the terminal device and a reference position of the serving cell and a position offset between the terminal device and a reference position of the first candidate cell.

**84.** The network device according to any one of claims 77 to 83, wherein the target cell is one of one or more candidate cells corresponding to the terminal device, and the target cell is determined by the terminal device according to a priority order of the one or more candidate cells.

**85.** The network device according to claim 84, wherein the priority order of the one or more candidate cells is determined according to first information, and the first information includes one or more of:

an available spectrum resource of the one or more candidate cells;
a service time of the one or more candidate cells for the terminal device;
a service time of the serving cell for the terminal device; and
a measurement result of the one or more candidate cells.

**86.** The network device according to claim 85, wherein part or all of the first information is carried in a reconfiguration message sent by the serving cell.

**87.** The network device according to any one of claims 84 to 86, wherein a second candidate cell is any one of the one or more candidate cells, a priority order of the second candidate cell is determined according to a first target value corresponding to the second candidate cell, and the first target value is determined based on:

$$F_u^l = \alpha \times \frac{T_u^l}{T_{\max}} + \mu \times \frac{10^{\frac{S_u^l}{10}}}{10^{\frac{S_{\max}}{10}}} + \gamma \times \frac{R_u^l}{R_{\max}}$$

wherein $F_u^l$ represents the first target value corresponding to the second candidate cell, $T_u^l$ represents a time when the second candidate cell covers the terminal device, $T_{\max}$ represents a longest time when the terminal device is covered by a single cell, $S_u^l$ represents a signal-to-interference plus noise ratio between the second candidate cell and the terminal device, $S_{\max}$ represents a maximum value of a signal-to-interference plus noise ratio between the single cell and the terminal device, $R_u^l$ represents an available service link rate between the second candidate cell and the terminal device, $R_{max}$ represents a maximum service link rate between the single cell and the terminal device, and $\alpha$, $\mu$, and $\gamma$ represent weights of a cell service time, a signal-to-interference plus noise ratio, and a service link rate, respectively.

88. The network device according to claim 87, wherein the available service link rate between the second candidate cell and the terminal device is determined according to one or more of:

an available spectrum resource allocated by the second candidate cell to the terminal device;
a spectrum efficiency of the terminal device;
whether a service link exists between the second candidate cell and the terminal device; and
an available service capacity of the second candidate cell.

89. A terminal device, comprising: a transceiver, a memory, and a processor, wherein the memory is configured to store a program, and the processor is configured to invoke the program in the memory to cause the terminal device to perform the method according to any one of claims 1 to 16.

90. A network device, comprising: a transceiver, a memory, and a processor, wherein the memory is configured to store a program, and the processor is configured to invoke the program in the memory to cause the network device to perform the method according to any one of claims 17 to 32 and 33 to 44.

91. An apparatus, comprising a processor, wherein the processor is configured to invoke a program from a memory to cause the apparatus to perform the method according to any one of claims 1 to 44.

92. A chip, comprising a processor, wherein the processor is configured to invoke a program from a memory to cause a device on which the chip is installed to perform the method according to any one of claims 1 to 44.

93. A computer-readable storage medium storing a program, wherein the program causes a computer to perform the method according to any one of claims 1 to 44.

94. A computer program product comprising a program, wherein the program causes a computer to perform the method according to any one of claims 1 to 44.

95. A computer program, wherein the computer program causes a computer to perform the method according to any one of claims 1 to 44.

100

110

120

120

FIG. 1

NG-RAN

210

NR Uu

NG

5G CN

N6

Data network

222 221

RRU

FIG. 2

NG-RAN

210

N1/2/3 over SRI

NG

5G CN

N6

Data network

222 221

FIG. 3

FIG. 4

FIG. 5

FIG. 6

the terminal device performs measurement according to a re-measurement time that is configured — S705

the terminal device executes a handover from the serving cell to the target cell — S710

FIG. 7

| Terminal device | Serving cell | Target cell | Other candidate cells |

S810, measurement report

S820a, handover request

S820a, handover request

S820b, handover request acknowledgement

S820b, handover request acknowledgement

S830, determine a priority order of the one or more candidate cells

S840, conditional handover execution event evaluation

S850, random access

FIG. 8

serving satellite sends measurement configuration — S811

$n=0$

$n=n+1$

UE performs RRM measurement — S812

UE determines the first position offset — S813

Whether the first condition is met — S814

No

Yes

Store a measurement value and PCI of the candidate satellite

UE sends a measurement report to a serving satellite — S815

FIG. 9

FIG. 10

UE performs the second RRM measurement — S831

$l=0$

$l=l+1$

obtain spectrum resource information and service time threshold of the candidate cell and time threshold for stopping service of the serving satellite — S832

UE determines a priority order of the candidate cell

UE prioritizes the candidate cell — S833

Whether the second condition is met — S841

No

Yes

UE triggers a handover to the target satellite — S842

FIG. 11

| Terminal device | Serving cell | Target cell | Other candidate cells |
|---|---|---|---|

S851, establish uplink synchronization connection

S852, handover success

S853, SN state transition

S854, handover cancel

FIG. 12

Terminal device 1300

Sending module 1310

Handover module 1320

FIG. 13

Network device 1400

Receiving module 1410

Configuration module 1420

FIG. 14

Network Device 1500

Receiving module 1510

FIG. 15

Apparatus 1600

Processor 1610

Memory 1620

Transceiver 1630

FIG. 16

## INTERNATIONAL SEARCH REPORT

International application No.

**PCT/CN2023/095770**

| A. CLASSIFICATION OF SUBJECT MATTER |
|---|
| H04W36/00(2009.01)i; H04W24/08(2009.01)i |

According to International Patent Classification (IPC) or to both national classification and IPC

| B. FIELDS SEARCHED |
|---|

Minimum documentation searched (classification system followed by classification symbols)

    IPC: H04W

Documentation searched other than minimum documentation to the extent that such documents are included in the fields searched

Electronic data base consulted during the international search (name of data base and, where practicable, search terms used)

    CNKI, CNTXT, ENTXTC, ENTXT, 3GPP: 终端, 用户设备, 发送, 条件, 测量报告, 触发, 定位, 位置偏移量, 参考位置, 优先级, 频谱, 速率, 服务时间, 信噪比, 小区, 候选, terminal, UE, send, transmit, condition, measurement report, trigger, position, position offset, reference position, priority, spectrum, rate, service time, SNR, cell, candidate

| C. DOCUMENTS CONSIDERED TO BE RELEVANT | | |
|---|---|---|
| Category* | Citation of document, with indication, where appropriate, of the relevant passages | Relevant to claim No. |
| X | CN 116097711 A (HUAWEI TECHNOLOGIES CO., LTD.) 09 May 2023 (2023-05-09) description, paragraphs [0105]-[0250] | 1-11, 14-27, 30-42, 45-55, 58-71, 74-86, 89-95 |
| A | CN 108235336 A (VIVO COMMUNICATION TECHNOLOGY CO., LTD.) 29 June 2018 (2018-06-29) entire document | 1-95 |
| A | CN 108882293 A (GUANGDONG OPPO MOBILE COMMUNICATIONS CO., LTD.) 23 November 2018 (2018-11-23) entire document | 1-95 |
| A | US 2021377828 A1 (PANASONIC INTELLECTUAL PROPERTY CORPORATION OF AMERICA) 02 December 2021 (2021-12-02) entire document | 1-95 |
| A | CATT. "Correction the MEASUREMENT REPORT sending time in test case 8.4.1.29" *3GPP tsg_ran\WG5_Test_ex-T1 R5-115292*, 04 November 2011 (2011-11-04), entire document | 1-95 |

☐ Further documents are listed in the continuation of Box C.    ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 February 2024** | **05 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/095770**

| Patent document cited in search report | | | Publication date (day/month/year) | Patent family member(s) | | | Publication date (day/month/year) |
|---|---|---|---|---|---|---|---|
| CN | 116097711 | A | 09 May 2023 | WO | 2022027370 | A1 | 10 February 2022 |
| | | | | WO | 2022027831 | A1 | 10 February 2022 |
| | | | | US | 2023189203 | A1 | 15 June 2023 |
| | | | | EP | 4187958 | A1 | 31 May 2023 |
| CN | 108235336 | A | 29 June 2018 | None | | | |
| CN | 108882293 | A | 23 November 2018 | None | | | |
| US | 2021377828 | A1 | 02 December 2021 | EP | 3700257 | A1 | 26 August 2020 |
| | | | | JP | 2022521220 | A | 06 April 2022 |
| | | | | WO | 2020169331 | A1 | 27 August 2020 |
| | | | | EP | 3928555 | A1 | 29 December 2021 |

Form PCT/ISA/210 (patent family annex) (July 2022)